(19) **Europäisches Patentamt / European Patent Office / Office européen des brevets**

(11) **EP 2 919 156 A2**

(12) **EUROPEAN PATENT APPLICATION**

(43) Date of publication:
16.09.2015 Bulletin 2015/38

(51) Int Cl.:
*G06K 9/00* (2006.01)

(21) Application number: 15157769.9

(22) Date of filing: 05.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 12.03.2014 JP 2014048744
13.01.2015 JP 2015004282

(71) Applicant: **Ricoh Company, Ltd.**
**Tokyo 143-8555 (JP)**

(72) Inventor: **Kasahara, Ryosuke**
**Tokyo, 143-8555 (JP)**

(74) Representative: **Schwabe - Sandmair - Marx**
**Patentanwälte**
**Stuntzstraße 16**
**81677 München (DE)**

(54) **Image processing apparatus, vehicle-mounted device control system, method of image processing, image processsing programm, and carrier medium**

(57) An image processing apparatus (102) conducts an image processing to detect an object, existing in a lighting area irradiated by a lighting unit (202), based on an image captured by an image capturing unit (101). The image processing apparatus (102) includes a memory (209) to store first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;" and a process execution unit (1021) to compute the external disturbance factor value "S" by multiplying the first pixel value information "y(x,t)" and the correlation value information "z(x)" for each one of the plurality of sections "x," to compute a fluctuation component "S x z (x)" caused by the external disturbance by multiplying the computed external disturbance factor value "S" and the correlation value information "z(x)," to compute second pixel value information "y'(x,t)" by removing the fluctuation component "S x z(x)" from the first pixel value information "y(x,t)," and to conduct the image processing using the second pixel value information "y'(x,t)" having removed the fluctuation component "S x z(x).

FIG. 1

EP 2 919 156 A2

**Description**

BACKGROUND

Technical Field

The present invention relates to an image processing apparatus, a vehicle-mounted device control system, an image processing program, and a carrier medium of program applicable for an image processing for detecting an object in an image capturing area based on a captured image captured by one or more image capturing units.

Background Art

Adhered substance detection apparatuses that detect substances (i.e., detection target) adhered on light transmitting members such as windshield of vehicles (e.g., automobiles, ships, airplanes) or window glass of buildings are known. For example, JP-2010-14494-A discloses a foreign particles detection apparatus or adhered substance detection apparatus that detects foreign particles or substance adhered on windshields of automobiles. The foreign particles detection apparatus includes a lighting unit and a camera, in which the lighting unit includes a light emission unit disposed on an inner face of the windshield that emits light to the windshield, and an image of light reflected from foreign particles such as raindrops adhered on an outer face of the windshield is captured by the camera.

The illumination light emitted from the light emission unit reflects at the outer face of the windshield where raindrops do not adhere, and a regular reflection light reflected at the outer face of the windshield is received by the camera as regular reflection light while the illumination light passes through the outer face of the windshield where raindrops adhere, and thereby the light is not received by the camera. This configuration can determine that raindrops adhere on a portion where luminance of captured image is low.

JP-2010-14494-A discloses the adhered substance detection apparatus using a light emitting diode (LED) as the light emission unit. Emission output of LED changes when temperature changes. Specifically, when temperature increases, the emission output of the light emission unit decreases. Further, the emission output of the light emission unit decreases due to aging of LED over time. When the emission output of the light emission unit changes, an erroneous detection may occur. For example, the adhered substance detection apparatus may detect that raindrops adheres even if no raindrops adhere actually, or may detect that raindrops do not adhere even if raindrops adhere actually. This problem is not limited to the lighting unit using LED but can be observed in other lighting units that the emission output changes when temperature changes.

Further, various optical parts are disposed along a light path from the light emission unit to an image sensor of the camera to guide the light emitted from the light emission unit to the image sensor. These optical parts may change shapes and properties due to temperature change, and thereby optical properties of the optical parts may change. Therefore, when temperature changes and optical properties of the optical parts change, the light intensity received by the image sensor may fluctuate and an erroneous detection of raindrops may occur.

The erroneous detection of raindrops caused by temperature change cannot be solved by a typical feedback control that corrects a detection result of a temperature sensor by a feedback processing because temperature condition varies depending on setting positions of the lighting unit and optical parts, which receive the effect of temperature change, and temperature at the lighting unit and optical parts cannot be detected with high precision. Further, the erroneous detection of raindrops caused by temperature change may occur differently for each manufacturing lot of the adhered substance detection apparatuses due to variance of manufacturing lot of the lighting units and optical parts, and thereby the typical feedback control is difficult to apply. Further, the erroneous detection of raindrops can be caused by a complex combination of temperature change and other factors such as external disturbance factors including unknown factors, and thereby identification of factors and correction of error are difficult to conduct.

Although the raindrop detection process is described in the above, the erroneous detection of detection target may similarly occur to image processing apparatuses when the lighting unit irradiates light to a lighting area, the camera captures an image, and an image processing is conducted to detect a detection target existing in the lighting area based on the captured image. The erroneous detection of raindrops may occur due to the fluctuation of external disturbance factors including the above described temperature change and others such as humidity change.

SUMMARY

In one aspect of the present invention, an image processing apparatus or conducting an image processing to detect an object, existing in a lighting area irradiated by a lighting unit, based on an image captured by an image capturing unit is devised. The image processing apparatus includes a memory to store first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;" and a process execution unit to compute the external disturbance factor value "S" by multiplying the first pixel value information "y(x,t)" and the correlation value information "z(x)" for each one of the plurality of sections "x," to compute a fluctuation component "S x z(x)" caused by the external disturbance by multiplying the computed external disturbance factor value "S" and the correlation value information "z(x)," to compute second pixel value information "y'(x,t)" by removing the fluctuation component "S x z(x)" from the first pixel value information "y(x,t)," and to conduct the image processing using the second pixel value information "y'(x,t)" having removed the fluctuation component "S x z(x).

In another aspect of the present invention, a vehicle-mounted device control system is devised. The vehicle-mounted device control system includes the above described image processing apparatus to conduct an image processing to detect an object, existing in a lighting area irradiated by a lighting unit, based on an image captured by an image capturing unit; and a vehicle-mounted device controller to control one or more devices disposed in a vehicle based on a detection result of the object detected by the image processing apparatus.

In another aspect of the present invention, a method of processing an image to detect an object, existing in a lighting area irradiated by a lighting unit, based on an image captured by an image capturing unit is devised. The method includes the steps of storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" is variable along the time "t;" computing the external disturbance factor value "S" by multiplying the first pixel value information "y(x,t)" and the correlation value information "z(x)" for each one of the plurality of sections "x;" computing a fluctuation component "S x z(x)" caused by the external disturbance by multiplying the computed external disturbance factor value "S" and the correlation value information "z(x);" computing second pixel value information "y'(x,t)" by removing the fluctuation component "S x z(x)" from the first pixel value information "y(x,t);" and conducting the image processing using the second pixel value information "y'(x,t)" having removed the fluctuation component "S x z(x).

In another aspect of the present invention, a program that, when executed by a computer having a processing circuitry, causes the computer to execute a method of processing an image to detect an object, existing in a lighting area irradiated by a lighting unit, based on an image captured by an image capturing unit is devised. The method includes the steps of storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" is variable along the time "t;" computing the external disturbance factor value "S" by multiplying the first pixel value information "y(x,t)" and the correlation value information "z(x)" for each one of the plurality of sections "x;" computing a fluctuation component "S x z(x)" caused by the external disturbance by multiplying the computed external disturbance factor value "S" and the correlation value information "z(x);" computing second pixel value information "y'(x,t)" by removing the fluctuation component "S x z(x)" from the first pixel value information "y(x,t);" and conducting the image processing using the second pixel value information "y'(x,t)" having removed the fluctuation component "S x z(x).

In another aspect of the present invention, a non-transitory computer-readable carrier medium storing a program that, when executed by a computer having a processing circuitry, causes the computer to execute a method of processing an image to detect an object, existing in a lighting area irradiated by a lighting unit, based on an image captured by an image capturing unit. The method includes the steps of storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" is variable along the time "t;" computing the external disturbance factor value "S" by multiplying the first pixel value information "y(x,t)" and the correlation value information "z(x)" for each one of the plurality of sections "x;" computing a fluctuation component "S x z(x)" caused by the external disturbance by multiplying the computed external disturbance factor value "S" and the correlation value information "z(x);" computing second pixel value information "y'(x,t)" by removing the fluctuation component "S x z(x)" from the first pixel value information "y(x,t);" and conducting the image processing using the second pixel value information "y'(x,t)" having removed the fluctuation component "S x z(x). The above described image processing apparatus, vehicle-mounted device control system, image processing method, image processing program, and carrier medium of image processing program can suppress, in particular prevent, an erroneous detection of a detection target object caused by one or more external disturbance factors.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 illustrates a schematic configuration of a control system for controlling vehicle-mounted devices according to one or more example embodiments;

FIG. 2A illustrates a schematic configuration of an adhered substance detection apparatus having an image capturing unit of the control system of FIG. 1;

FIG. 2B illustrates a configuration of an image analyzer for the adhered substance detection apparatus of FIG. 2A;

FIG. 3 illustrates an example of an optical system of the image capturing unit of FIG. 2;

FIG. 4 illustrates a perspective view of a configuration of the image capturing unit of FIG. 2;

FIG. 5A illustrates a side view of the image capturing unit attached to a vehicle having an inclination angle of 22 degrees for a windshield with respect to the horizontal direction;

FIG. 5B illustrates an optical scheme of the image capturing unit when raindrops do not adhere under the conditions of FIG. 5A;

FIG. 5C illustrates an optical scheme of the image capturing unit when raindrops adhere under the conditions of FIG. 5A;

FIG. 6 illustrates a perspective view of a reflective deflection prism of the image capturing unit;

FIG. 7 illustrates a filter property of a cut-filter applicable for image data captured for adhered substance detection such as raindrop detection;

FIG. 8 illustrates a filter property of a band-pass filter for image data captured for adhered substance detection such as raindrop detection;

FIG. 9 illustrates a front view of a front-end filter of an optical filter of the image capturing unit;

FIG. 10 illustrates an example of an image generated from image data captured by the image capturing unit;

FIG. 11 illustrates a schematic cross-sectional configuration of the optical filter and an image sensor of the image capturing device viewed from a direction perpendicular to a light passing direction;

FIG. 12 illustrates an example of an area dividing pattern for a polarization filter and a light separation filter of the optical filter;

FIG. 13 illustrates a schematic cross-sectional view of layers of the optical filter;

FIG. 14 illustrates an example pixel configuration of the optical filter, in which light passes a vehicle detection filter area of the optical filter, and then received by each photodiode on the image sensor, and information corresponding to the received light information of each image capture pixel is shown;

FIG. 15A illustrates a schematic cross-sectional view of the vehicle detection filter area of the optical filter and the image sensor cut at a line A-A shown in FIG. 14;

FIG. 15B illustrates a schematic cross-sectional view of the vehicle detection filter area of the optical filter and the image sensor cut at a line B-B shown in FIG. 14;

FIG. 16 illustrates an example pixel configuration of the optical filter, in which light passes a raindrop detection filter area of the optical filter, and then received by each photodiode on the image sensor, and information corresponding to the received light information of each image capture pixel is shown;

FIG. 17A illustrates a schematic cross-sectional view of the raindrop detection filter area of the optical filter and the image sensor cut at a line A-A shown in FIG. 16;

FIG. 17B illustrates a schematic cross-sectional view of the raindrop detection filter area of the optical filter and the image sensor cut at a line B-B shown in FIG. 16;

FIG. 18 illustrates a histogram of computed polarization index (S-P)/(S+P) of direct light coming from a headlight, and reflection light of headlight reflected from a wet road surface in rainy weather prepared from images captured by the image capturing unit;

FIG. 19 illustrates a schematic image captured by the image capturing unit when a front-running vehicle and an oncoming vehicle are both present at the same distance in a forward direction of a vehicle, wherein all vehicles are present on a wet road surface;

FIG. 20 illustrates a flowchart showing the steps of a process of vehicle detection according to one or more example embodiments;

FIGs. 21A and 21B are example photos captured for the same image capturing area including a lane captured under a rainy weather, in which FIG. 21A illustrates a monochrome luminance image of non-separated light and non-polarized light and FIG. 21B illustrates a polarization-light-based image of non-separated light;

FIG. 22 illustrates a schematic view of an image area used for a raindrop detection process.

FIG. 23 illustrates a timing chart illustrating an image capturing operation by the image capturing unit as an image capturing operation of example 1;

FIG. 24 illustrates a timing chart illustrating an image capturing operation by the image capturing unit as an image capturing operation of example 2;

FIG. 25 illustrates a detection model for a detection process of raindrop;

FIG. 26 illustrates a flowchart showing the steps of a process of correcting a detection error of raindrop caused by temperature change;

FIG. 27 illustrates a graph showing an experiment result of total luminance value of each section when temperature is increased from 0 to 60 Celsius degrees for an imaging environment illuminated by a constant level of illumination light; and

FIG. 28 illustrates a schematic configuration of an image capture device, a light source, and light beams used for a raindrop detection process of a variant example.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

A description is given of a control system for controlling vehicle-mounted devices (hereinafter, control system or vehicle-mounted device control system) according to one or more example embodiments, in which an image processing apparatus is installed in a vehicle that is an example of movable apparatuses. The image processing apparatus can be used for the control system, and can be also applied to other systems having an object detector or object detection apparatus to conduct the detection of objects irradiated by light of a lighting unit. The vehicle may not be limited to any specific vehicles but may include various types of vehicles such as automobiles, ships, airplanes, robots or the like.

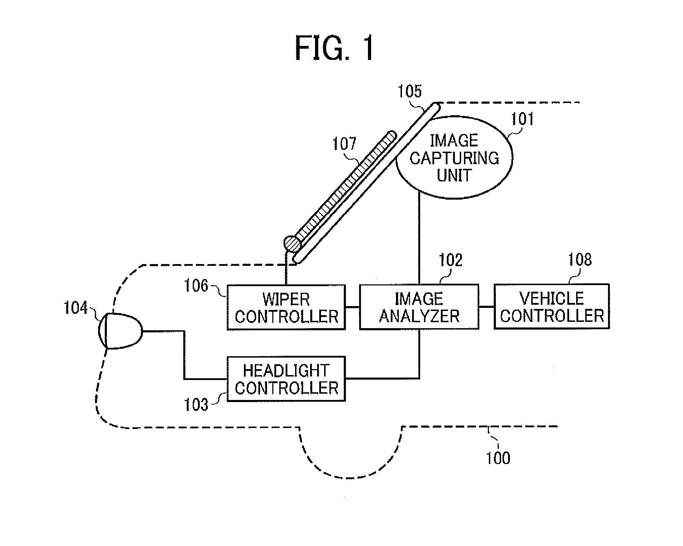

FIG. 1 illustrates a schematic configuration of the control system for controlling vehicle-mounted devices according to one or more example embodiments, which may be referred to as the control system or vehicle-mounted device control system. A vehicle 100 such as automobiles may include the control system, and an image capturing unit. The image capturing unit can capture views of areas around the vehicle 100 such as a front area of the vehicle 100 as captured image data. Based on the captured image data, the control system conducts a light control of headlight, a wiper-drive control, a control of other vehicle-mounted devices or the like.

The control system includes, for example, an image capturing unit 101, which can be used as an image capturing unit or apparatus. The image capturing unit 101 includes an image capturing device to capture views of vehicle-front-area of the vehicle 100, wherein vehicle-front-area may be referred to as image capturing area or captured image area. For example, the image capturing device captures a vehicle-front-area of the vehicle 100 when the vehicle 100 is running. The image capturing unit 101 may be, for example, disposed near a rear-view mirror and a windshield 105 of the vehicle 100.

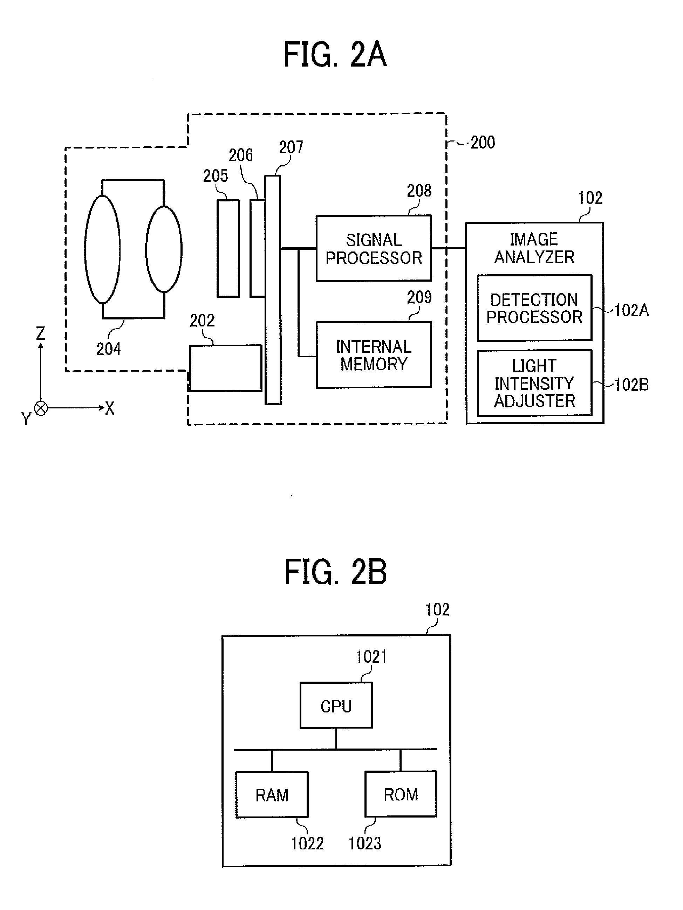

The image data captured by the image capturing unit 101 is input to an image analyzer 102 illustrated in FIG. 2A. The image analyzer 102 includes, for example, a central processing unit (CPU) 1021 process execution unit, a random access memory (RAM) 1022, and a read only memory (ROM) 1023 as illustrated in FIG. 2B. The image analyzer 102 analyzes the captured image data, transmitted from the image capturing unit 101, in which the image analyzer 102 computes information of other vehicle existing in a front direction of the vehicle 100 such as vehicle position, a point of the compass (e.g., north, south, east, west), and distance to other vehicles. Further, the image analyzer 102 can be used to detect a substance adhered on the windshield 105 such as raindrops, foreign particles, or the like. Further, the image analyzer 102 can be used to detect a detection-target object on road surfaces such as a lane (e.g., white line) or the like existing in the image capturing area. In this description, the windshield 105 is described as an example of a light transmitting member.

Specifically, by recognizing a tail lamp of other vehicles, the image analyzer 102 can detect a front-running vehicle running in front of the vehicle 100 in the same running direction, and by recognizing a headlight of other vehicles, the image analyzer 102 can detect an oncoming vehicle coming toward the vehicle 100 such as head-to-head direction.

The computation result of the image analyzer 102 can be transmitted to a headlight controller 103. For example, the headlight controller 103 generates control signals to control a headlight 104 based on distance or position data of other vehicle computed by the image analyzer 102, wherein the headlight 104 is one of devices installed in the vehicle 100. Specifically, for example, a switching control of high beam/low beam of the headlight 104 is conducted, and further a light-dimming control is partially conducted for the headlight 104 to prevent a projection of high intensity light of headlight of the vehicle 100 to eyes of drivers of front-running vehicles and oncoming vehicles, by which the drivers of other vehicles are not dazzled by light coming from the headlight of the vehicle 100 while providing the enough field of view for the driver of vehicle 100.

The computation result of the image analyzer 102 is also transmitted to a wiper controller 106. The wiper controller 106 controls a wiper 107 to remove an adhered substance adhered on the windshield 105 such as raindrops, foreign particles or the like from the windshield 105 of the vehicle 100. The wiper controller 106 generates control signals to control the wiper 107 by receiving the detection result of foreign particles from the image analyzer 102. When the control signals generated by the wiper controller 106 are transmitted to the wiper 107, the wiper 107 is activated to provide the field of view for the driver of the vehicle 100.

Further, the computation result of the image analyzer 102 is also transmitted to a vehicle controller 108, which controls the driving of the vehicle 100. If the vehicle 100 deviates or departs from the vehicle lane, defined by the lane (e.g., white line), based on the detection result of the lane detected by the image analyzer 102, the vehicle controller 108 activates an alarm or warning to the driver of the vehicle 100, and activates a cruise control system such as controlling of a steering wheel and/or a brake of the vehicle 100.

Further, if the vehicle controller 108 determines that the vehicle 100 comes to a position close to the front-running vehicle based on a detection result of position data of other vehicle detected by the image analyzer 102, the vehicle controller 108 activates an alarm or warning to the driver of the vehicle 100, and activates a cruise control system such as controlling of a steering wheel and/or a brake of the vehicle 100.

FIG. 2A illustrates a schematic configuration of an adhered substance detection apparatus using the image capture device 200 disposed in the image capturing unit 101. The image capture device 200 includes, for example, a capture lens 204, an optical filter 205, a sensor board 207, a signal processor 208, and an internal memory 209. The sensor board 207 includes the image sensor 206 composed of a two-dimensional pixel array, which can be configured by arraying a number of light receiving elements in two dimensional directions. Each of light receiving elements of the image sensor 206 receives light having a given light quantity, and the sensor board 207 outputs analog electrical signals corresponding to the received light quantity to the signal processor 208. Upon receiving the analog electrical signals, the signal processor 208 converts the analog electrical signals to digital electrical signals to generate and output the captured image data.

Further, a light source unit 202 is disposed on the sensor board 207. The light source unit 202 is disposed at an inner face (one face or first face) side of the windshield 105, and can be used to detect substance adhered on an outer face (other face or second face) side of the windshield 105, wherein the adhered substance (i.e., detection target object) is, for example, raindrop. The light source unit 202 can be used as a lighting unit that irradiates light.

In one or more example embodiments, the optical axis of the capture lens 204 is disposed in the image capturing unit 101 by aligning the optical axis of the capture lens 204 to the horizontal direction, but not limited hereto. For example, the optical axis of the capture lens 204 can be set to a given direction with respect to the horizontal direction (X direction in FIG. 2A). The capture lens 204 can be configured with, for example, a plurality of lenses, and has a focal position set at a position far from the windshield 105. The focal position of the capture lens 204 can be set, for example, at infinity or between infinity and the windshield 105.

The image sensor 206 is composed of a plurality of light receiving elements arranged two-dimensionally to receive light passing through the optical filter 205 and a cover glass protecting the sensor face, and each light receiving elements (or image capture pixel) has a function of photoelectric conversion of incident light. For example, the image sensor 206 is composed of several hundreds of thousands of pixels arranged two-dimensionally. The image sensor 206 is an image sensor employing, for example, a charge coupled device (CCD) that reads signals of each of image capturing elements by exposing all of image capturing elements at the same time (global shutter), and a complementary metal oxide semiconductor (CMOS) that reads signals of each of image capturing elements exposed by a line exposure (rolling shutter), and the light receiving elements employs, for example, photodiode.

Light coming from the image capturing area, including an object (or detection-target object), passes the capture lens 204 and the optical filter 205, and then the image sensor 206 photo electrically converts the received light to electrical signals based on the light quantity. When the signal processor 208 receives electrical signals such as analog signals (i.e., quantity of incident light to each of light receiving elements of the image sensor 206) output from the sensor board 207, the signal processor 208 converts the analog signals to digital signal to be used as captured image data. The signal processor 208 is electrically connected with the image analyzer 102. Upon receiving the electrical signals (analog signals) from the image sensor 206 via the sensor board 207, the signal processor 208 generates digital signals (captured image data), based on the received electrical signals, indicating luminance for each of image capturing elements (image capture pixel) of the image sensor 206. The signal processor 208 outputs the captured image data to a later stage unit such as the image analyzer 102 with horizontal/vertical synchronization signals of image.

As to one or more example embodiments, the image sensor 206 includes a plurality of optical black areas used for dark correction (black level control: BLC), to-be-described later, outside the effective image capturing elements, in which the optical black area is composed of light receiving elements configured not to receive light. Signals output from the optical black area are transmitted to the signal processor 208 and used to measure a noise level of dark current. Specifically, the signal processor 208 can be used as a zero level setting unit. For example, the signal processor 208 adds an average level of signals output from the optical black area and a given margin as a signal of zero level (i.e., pixel value of zero) of captured image data. With this configuration, among analog electrical signals output from the sensor board 207, signals equal to the zero level or less are assumed as zero.

Further, analog electrical signals exceeding the zero level are converted to digital electrical signals having a digital value derived from by dividing the signals between the zero level signal and the maximum level signal with a given "gradation number. With this configuration, a detection error that the light receiving elements, not actually receiving light at all, receives light can be avoided, even if dark current flows in the light receiving elements of the image sensor 206.

Further, the image analyzer 102 controls the image capturing operation of the image capturing unit 101, and analyzes captured image data transmitted from the image capturing unit 101. Based on the captured image data transmitted from the image capturing unit 101, the image analyzer 102 computes a preferable exposure value for each of target objects captured using the image sensor 206 such as other vehicles existing in a front direction of the vehicle 100, raindrops adhered on the windshield 105, freezing condition of the windshield 105, fogging condition on the windshield 105 or the like, and sets the preferable exposure value (e.g., exposure time) for each of the target objects captured using the image sensor 206.

Further, the image analyzer 102 adjusts an emission timing of the light source unit 202 by synchronizing with an exposure value adjustment. Further, the image analyzer 102 detects information such as road surface condition, road traffic signs, or the like from the captured image data transmitted from the image capturing unit 101.

Further, the image analyzer 102 includes, for example, a detection processor 102A and a light quantity adjuster 102B. The image analyzer 102 can be used to detect conditions of the windshield 105 (e.g., adhesion of raindrops, freezing, fogging) using the detection processor 102A. Image data captured by the image capturing device of the image capturing unit 101 is input to the image analyzer 102. The image analyzer 102 analyzes the captured image data, transmitted from the image capturing unit 101, in which the image analyzer 102 can be used to compute information of other vehicles existing in a front direction of the vehicle 100 such as a vehicle position, a point of the compass (e.g., north, south, east, west), and distance to other vehicles. Further, the image analyzer 102 can adjust light quantity of light irradiated by the light source unit 202 by using the light quantity adjuster 102B.

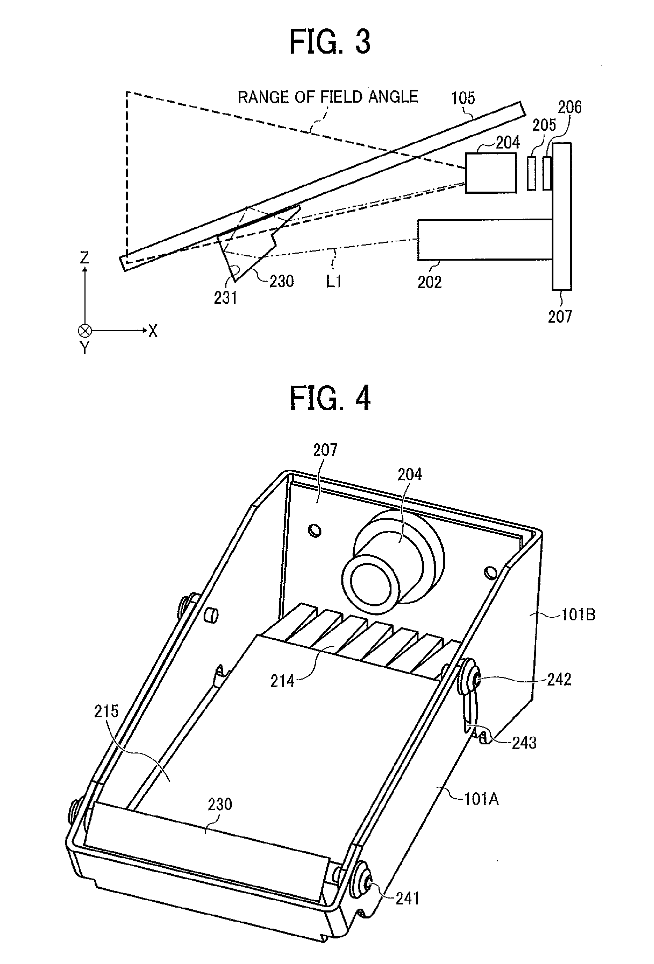

FIG. 3 illustrates an example of an optical system of the image capturing unit 101. The light source unit 202 irradiates light to detect foreign particles (e.g., raindrops, freezing, fogging) adhered on the windshield 105. The light source unit 202 includes a plurality of light emitting elements such as light emitting diodes (LED). By disposing a plurality of light emitting elements, a detection area of foreign particles on the windshield 105 can be enlarged, and the detection precision of adhered substances on the windshield 105 can be enhanced compared to using one light emitting element.

In the one or more example embodiments, the LEDs and the image sensor 206 are installed on the same sensor board 207, by which the numbers of board can be reduced compared to installing the LEDs and the image sensor 206 on different boards, by which less expensive cost can be achieved. Further, the LEDs can be arranged one row or a plurality of rows along the Y direction in FIG. 3. With this arrangement, the light used for capturing an image on the windshield 105, which is below an image area for displaying an image captured for a front direction of the vehicle 100, can be set as uniform light. As to one or more example embodiments, the light source unit 202 and the image sensor 206 are disposed on the same sensor board 207, but the light source unit 202 and the image sensor 206 can be disposed on different boards.

The light source unit 202 is disposed on the sensor board 207 to set a given angle between the optical axis direction of the light emitted from the light source unit 202 and the optical axis direction of the capture lens 204. Further, the light source unit 202 is disposed at a position so that an irradiation area on the windshield 105, illuminated by the light emitted from the light source unit 202, corresponds to a range of field angle (or a range of viewing angle) of the capture lens 204. The light source unit 202 can be composed of, for example, one or more light emitting diodes (LED) or laser diodes (LD). The emission wavelength of the light source unit 202 is preferably light other than the visible light so that drivers of the oncoming vehicles and foot passengers are not dazzled. Specifically, light having a wavelength range longer than a wavelength of the visible light and detectable by the image sensor 206 is employed. For example, infrared light having the wavelength window of 800 nm to 1000 nm can be used. The drive control of the light source unit 202 such as emission timing control may be conducted using the image analyzer 102 while linked to obtaining process of image signals from the signal processor 208.

As illustrated in FIG. 3, the image capturing unit 101 includes an optical member such as a reflective deflection prism 230 having a reflection face 231. The light emitted from the light source unit 202 can be reflected at the reflection face 231 and then guided to the windshield 105. The reflective deflection prism 230 has one face attached firmly to the inner face of the windshield 105 so that the light emitted from the light source unit 202 is guided to the windshield 105.

Specifically, the regular reflection light reflected regularly on the reflection face 231 of the reflective deflection prism 230 is guided to the windshield 105. The reflective deflection prism 230 is attached to the inner face (first face) of the windshield 105 with a condition to maintain that regular reflection light reflected regularly at a non-adhering area, where the detection target object such as raindrop does not adhere, on the outer face (second face) of the windshield 105, can be received by the image sensor 206 even when the incident angle of the light of the light source unit 202 entering the reflective deflection prism 230 changes within a given range.

When attaching the reflective deflection prism 230 to the inner face of the windshield 105, filler (i.e., light transmittable material) such as gel, sealing material, or the like is interposed between the reflective deflection prism 230 and the inner face of the windshield 105 to increase contact level. With this configuration, an air layer or bubble may not occur between the reflective deflection prism 230 and the windshield 105, by which the fogging may not occur between the reflective deflection prism 230 and the windshield 105. Further, the refractive index of filler is preferably between the refractive indexes of the reflective deflection prism 230 and the windshield 105 to reduce Fresnel reflection loss between the filler and the reflective deflection prism 230, and the filler and the windshield 105. The Fresnel reflection is a reflection that occurs between materials having different refractive indexes.

As illustrated in FIG. 3, the reflective deflection prism 230 regularly reflects an incident light from the light source unit 202 for one time at the reflection face 221 to direct reflection light to the inner face of the windshield 105. The reflection light can be configured to have an incidence angle $\theta$ (e.g., $\theta \geq$ about 42 degrees) with respect to the outer face of the windshield 105. This effective incidence angle $\theta$ is a critical angle that causes a total reflection on the outer face (second face) of the windshield 105 with an effect of a difference of refractive indexes between air and the outer face of the windshield 105. Therefore, in the one or more example embodiments, when foreign particles such as raindrops do not adhere on the outer face (second face) of the windshield 105, the reflection light reflected at the reflection face 231 of the reflective deflection prism 230 does not pass through the outer face (second face) of the windshield 105 but totally reflected at the outer face (second face) of the windshield 105.

By contrast, when foreign particles such as raindrops having refractive index of 1.38, different from air having refractive index of 1, adhere on the outer face of the windshield 105, the total reflection condition does not occur on the windshield 105, and the light passes through the outer face of the windshield 105 at a portion where raindrops adhere.

Therefore, the reflection light reflected at a non-adhering portion of the outer face of the windshield 105 where raindrops does not adhere is received by the image sensor 206 as an image having high intensity or luminance. By contrast, the quantity of the reflection light decreases at an adhering portion of the outer face of the windshield 105 where raindrops adhere, and thereby the light quantity received by the image sensor 206 decreases, and the reflection light is received by the image sensor 206 as an image having low intensity or luminance. Therefore, a contrast between the raindrop-adhering portion and the raindrop-non-adhering portion on the captured image can be obtained.

FIG. 4 illustrates a perspective view of schematic configurations of the image capturing unit 101. The image capturing unit 101 includes, for example, a first module 101A and a second module 101B. The first module 101A, used as a first supporter, supports the reflective deflection prism 230 by fixing to the first module 101A, and the first module 101A is fixed on the inner face of the windshield 105. The second module 101B, used as a second supporter, supports the sensor board 207 mounted with the image sensor 206 and the LED 211, a tapered light guide 215, and the capture lens 204 by fixing each unit to the second module 101B.

The first module 101A and the second module 101B are linked pivotably by a rotation mechanism 240 that includes a rotation axis 241 extending in a direction perpendicular to both of the slanting direction and the vertical direction of the windshield 105. The first module 101A and the second module 101B can be rotated or pivoted with each other about the rotation axis 241. This pivotable configuration is employed to set the image capturing direction of the image capture device 200 in the second module 101B to a specific target direction (e.g., horizontal direction) even if the first module 101A is fixed to the windshield 105 having different inclination angles.

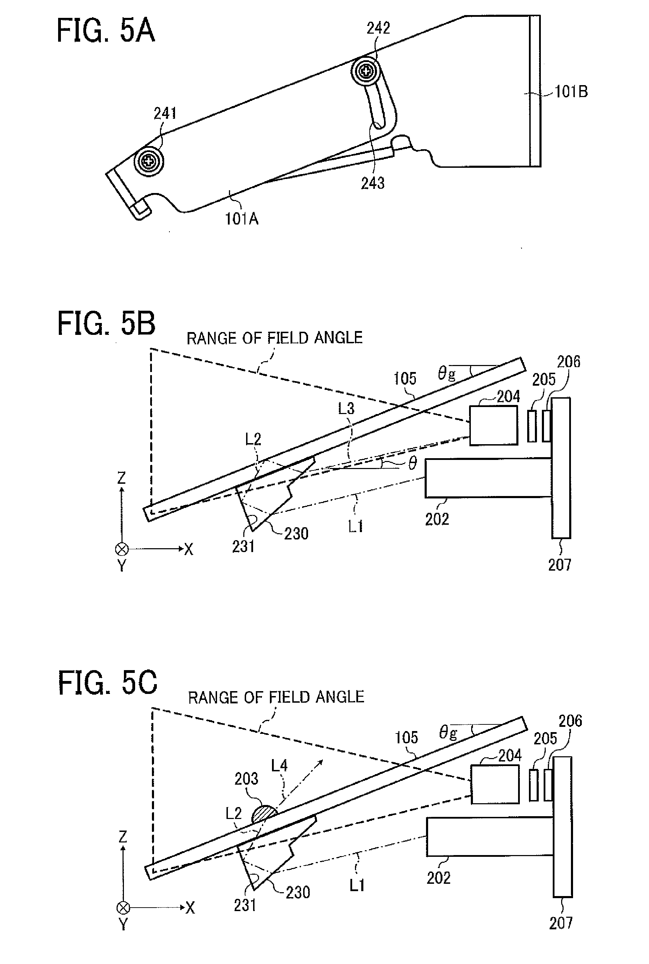

FIG. 5A illustrates a side view of the image capturing unit 101 attached to a vehicle having an inclination angle $\theta$g of 22 degrees for the windshield 105 with respect to the horizontal direction. FIG. 5B illustrates an optical scheme of the image capturing unit 101 when raindrops do not adhere under the conditions shown FIG. 5A. FIG. 5C illustrates an optical scheme of the image capturing unit 101 when raindrops adhere under the conditions shown FIG. 5A.

Light L1 emitted from the light source unit 202 is regularly reflected on the reflection face 231 of the reflective deflection prism 230 as a reflection light L2, and the reflection light L2 passes through the inner face of the windshield 105. If raindrops do not adhere on the outer face of the windshield 105, the reflection light L2 totally reflects on the outer face of the windshield 105 as a reflection light L3, and the reflection light L3 passes through the inner face of the windshield 105 toward the capture lens 204. By contrast, if raindrop 203 adheres on the outer face of the windshield 105, the reflection light L2, regularly reflected on the reflection face 231 of the reflective deflection prism 230, passes through the outer face of the windshield 105. In this configuration, when the inclination angle $\theta g$ of the windshield 105 is changed, a posture of the first module 101A attached to the inner face of the windshield 105 can be changed while maintaining a posture of the second module 101B (e.g., maintaining the image capturing direction toward the horizontal direction), in which the reflective deflection prism 230 rotates about the Y-axis in FIG. 5 in line with the inclination angle $\theta g$ of the windshield 105.

In the one or more example embodiments, a layout relationship of the reflection face 231 of the reflective deflection prism 230 and the outer face (second face) of the windshield 105 is set to a given configuration so that the total reflection light L3 reflected at the outer face of the windshield 105 can be received constantly at a receiving area (i.e., light receiving area for detecting adhered substance) of the image sensor 206 used for detecting the change of conditions of the windshield 105 within the rotation adjustment range of the rotation mechanism 240. Hereinafter, this receiving area may be referred to as an adhered substance detection receiving area. Therefore, even if the inclination angle $\theta g$ of the windshield 105 changes, the total reflection light L3 reflected at the outer face of the windshield 105 can be received by the adhered substance detection receiving area of the image sensor 206, by which a raindrops detection can be conducted effectively.

The layout relationship substantially satisfies the law of corner cube within the rotation adjustment range of the rotation mechanism 240. Therefore, even if the inclination angle $\theta g$ of the windshield 105 changes, an angle $\theta$ defined by the optical axis direction of the total reflection light L3 reflected at the outer face of the windshield 105 and the horizontal direction is substantially constant. Therefore, the optical axis of the total reflection light L3 reflected at the outer face of the windshield 105 can pass a portion of the adhered substance detection receiving area of the image sensor 206 with a small deviation, by which a raindrops detection can be conducted further effectively.

When a layout of the reflection face 231 of the reflective deflection prism 230 and the outer face of the windshield 105 is a perpendicular relationship, the law of corner cube is satisfied. However, if the law of corner cube is substantially satisfied within the rotation adjustment range of the rotation mechanism 240, the layout relationship of the reflection face 231 of the reflective deflection prism 230 and the outer face of the windshield 105 is not limited to the perpendicular relationship. Even if the layout relationship of the reflection face 231 of the reflective deflection prism 230 and the outer face of the windshield 105 is not the perpendicular relationship, the angle $\theta$ defined for the optical axis of the total reflection light L3, directing to the capture lens 204, can be substantially maintained at a constant level by adjusting an angle of other faces of the reflective deflection prism 230 (i.e., incident face and exit face) even if the inclination angle $\theta g$ of the windshield 105 changes.

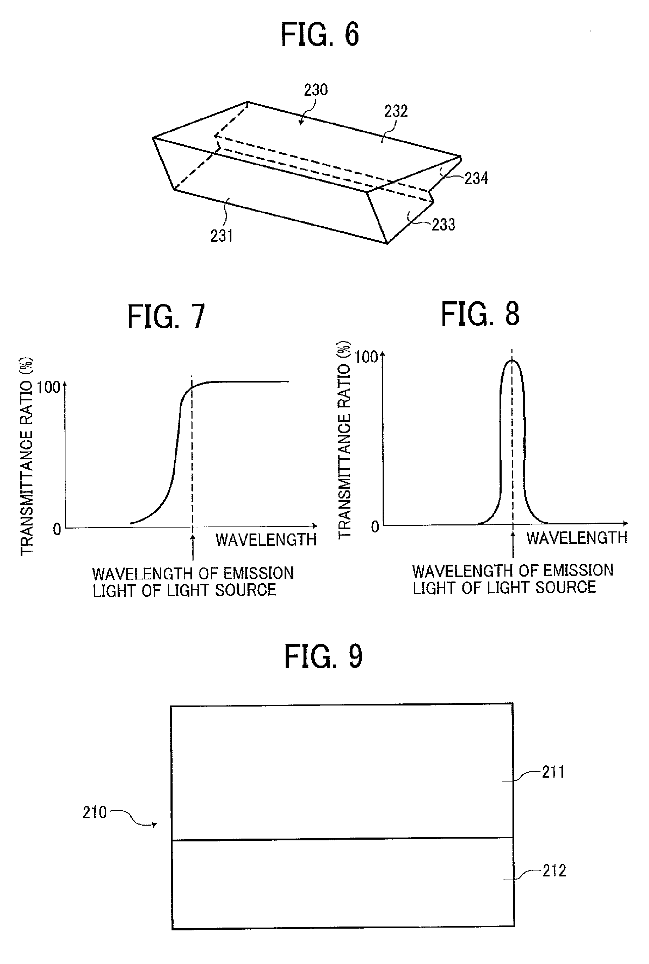

FIG. 6 illustrates a perspective view of the reflective deflection prism 230. The reflective deflection prism 230 includes, for example, the incidence face 233, the reflection face 231, the contact face 232, and the exit face 234. The light L1 emitted from the light source unit 202 enters the incidence face 233. The light L1 entering from the incidence face 233 is reflected on the reflection face 231. The contact face 232 is attached firmly to the inner face of the windshield 105. The reflection light L3 reflected at the outer face of the windshield 105 exits from the exit face 234 toward the image capture device 200. The incidence face 233 may be set in parallel with the exit face 234, but the incidence face 233 can be set with the exit face 234 as a non-parallel face.

The reflective deflection prism 230 can be made of materials that can pass through the light coming from the light source unit 202 such as glass, plastic, or the like. If the light coming from the light source unit 202 is infrared light, the reflective deflection prism 230 can be made of materials of dark color that can absorb visible lights. By employing materials that can absorb the visible light, it can reduce the intrusion of light (e.g., visible light from outside), which is not the light (e.g., infrared light) coming from a LED, to the reflective deflection prism 230.

Further, the reflective deflection prism 230 is formed to satisfy the total reflection condition that can totally reflect the light coming from the light source unit 202 at the reflection face 231 within the rotation adjustment range of the rotation mechanism 240. Further, if it is difficult to satisfy the total reflection condition at the reflection face 231 within the rotation adjustment range of the rotation mechanism 240, the reflection face 231 of the reflective deflection prism 230 can be formed with a layer of aluminum by vapor deposition to form a reflection mirror.

Further, although the reflection face 231 is a flat face in the example embodiments, the reflection face 231 can be a concave face such as a reflection face 225. By using the concave reflection face 225, the diffused light flux entering the reflection face 225 can be set parallel light flux. With this configuration, the reduction of light quantity on the windshield 105 can be suppressed.

When the image capture device 200 captures the infrared light reflected from the windshield 105, the image sensor 206 of the image capture device 200 receives the infrared light emitted from the light source unit 202, and also ambient light coming such as sun light including infrared light, and the ambient light includes infrared light has greater light quantity. To reduce the effect of the ambient light having greater light quantity to the infrared light coming from the light source unit 202, the light emission quantity of the light source 210 may be set greater than that of the ambient light. However, it is difficult to devise the light source unit 202 having the greater light emission quantity.

In view of such problem, in the example embodiment, for example, a suitable cut-filter or a band-pass filter may be used. As illustrated in FIG. 7, a cut-filter that cuts light having a wavelength smaller than a wavelength of emission light of the light source unit 202 can be used. Further, as illustrated in FIG. 8, a band-pass filter that passes through light having a specific wavelength of emission light of the light source unit 202, substantially matched to the peak of transmittance ratio of the light emitted by the light source unit 202, can be used. The image sensor 206 can effectively receive light emitted from the light source 210 using these filters. By using these filters, light having a wavelength different from the wavelength of light emitted from the light source unit 202 can be removed, and the image sensor 206 can receive the light emitted from the light source unit 202 with quantity relatively greater than quantity of the ambient light. Therefore, without using the light source unit 202 having greater light emission intensity, the light emitted from the light source unit 202 can be effectively received by the image sensor 206 while reducing the effect of the ambient light.

In the one or more example embodiments, the raindrop 203 on the windshield 105 can be detected based on the captured image data, and furthermore, the front-running vehicle and the oncoming vehicle, and the lane (e.g., white line) can be also detected based on the captured image data. Therefore, if the light having a wavelength other than a wavelength of infrared light, emitted from the light source unit 202, is removed from an entire image, the image sensor 206 cannot receive light having a wavelength required to detect the front-running vehicle/oncoming vehicle and the lane, by which the detection of front-running vehicle/oncoming vehicle and the lane cannot be conducted.

In view of such issue, an image area of captured image data is segmented into one detection image area used as an adhered substance detection image area (e.g., raindrop detection image area), and another detection image area used as a vehicle detection image area. The raindrop detection image area can be used to detect the raindrop 203 on the windshield 105. The vehicle detection image area can be used to detect the front-running vehicle/oncoming vehicle, and the lane (e.g., white line). Therefore, the optical filter 205 includes a filter that can remove light having a wavelength band, which is other than infrared light emitted from the light source unit 202, wherein this filter is disposed for the optical filter 205 only for the raindrop detection image area.

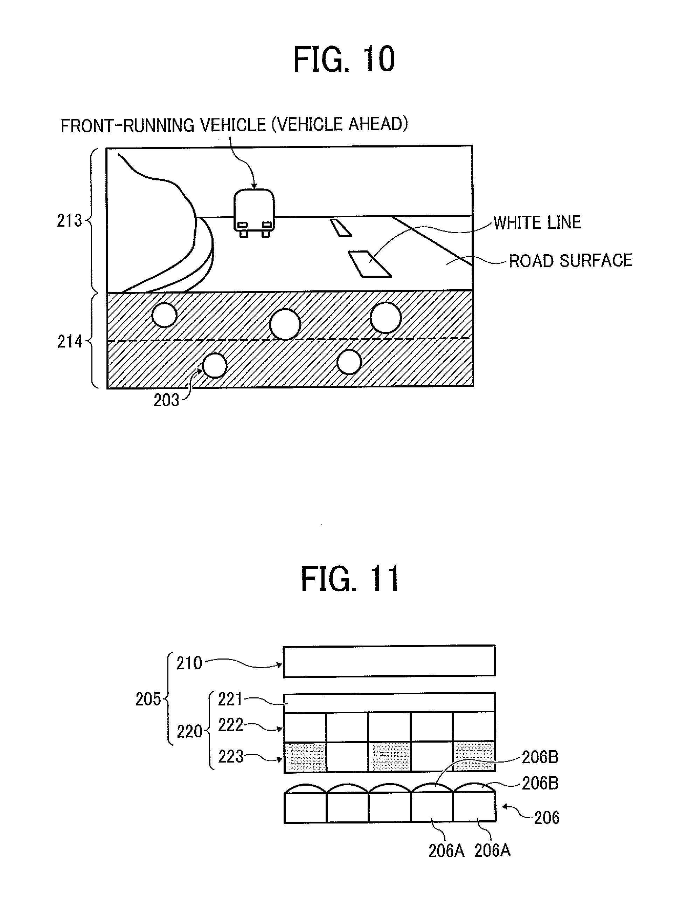

FIG. 9 illustrates a front view of a front-end filter 210 disposed for the optical filter 205. FIG. 10 illustrates an example of an image generated from captured image data. The optical filter 205 can be composed of a front-end filter 210 and a rear-end filter 220 stacked with each other in the light passing direction. As illustrated in FIG. 9, the front-end filter 210 is segmented into an infrared cut-filter area 211 and an infrared transmittance-filter area 212. The infrared cut-filter area 211 is disposed for a vehicle detection image area 213, which may be an upper two-thirds (2/3) of one image capturing area while the infrared transmittance-filter area 212 is disposed for an adhered substance detection image area 214, which may be a lower one-third (1/3) of one image capturing area. The infrared transmittance-filter area 212 employs, for example, a cut filter (FIG. 7) or a band-pass filter (FIG. 8).

The image capturing area can be segmented into an upper part and a lower part. Typically, an image of headlight of the oncoming vehicle, an image of tail lamp of the front-running vehicle, and an image of the lane (e.g., white line) are present at the upper part of the image capturing area, while an image of road surface, which exists in the front-direction and very close to the vehicle 100, is present at the lower part of the image capturing area. Therefore, information required to recognize or identify the headlight of the oncoming vehicle, the tail lamp of the front-running vehicle, and the lane is present mostly in the upper part of the image capturing area, and thereby information present in the lower part of the image capturing area may not be relevant for recognizing the oncoming vehicle, the front-running vehicle, and the lane.

Therefore, when an object detection process such as detecting the oncoming vehicle, the front-running vehicle, and/or the lane, and an adhered substance detection process are to be conducted concurrently based on the captured image data, the lower part of the image capturing area is corresponded to the adhered substance detection image area 214, and the upper part of the image capturing area is corresponded to the vehicle detection image area 213 as illustrated in FIG. 10. The front-end filter 210 is preferably segmented into areas corresponding to the vehicle detection image area 213 and the adhered substance detection image area 214.

In the one or more example embodiments, the adhered substance detection image area 214 is disposed at a portion below the vehicle detection image area 213, but not limited hereto. For example, the adhered substance detection image area 214 can be disposed at a portion above the vehicle detection image area 213, or the adhered substance detection image area 214 can be disposed at portions below and above the vehicle detection image area 213.

When the image capturing direction of the image capture device 200 is moved to a downward direction, a hood or bonnet of the vehicle 100 may appear at the lower part of the image capturing area. In such a case, sun light or the tail lamp of the front-running vehicle reflected on the hood of the vehicle 100 becomes ambient light. If the ambient light is included in the captured image data, the headlight of the oncoming vehicle, the tail lamp of the front-running vehicle, and the lane may not be recognized correctly.

In the one or more example embodiments, since the cut-filter (FIG. 7) or the band-pass filter (FIG. 8) can be disposed at a position corresponding to the lower part of the image capturing area, the ambient light such as sun light and the light of tail lamp of the front-running vehicle reflected from the hood can be removed. Therefore, the recognition precision of the headlight of the oncoming vehicle, the tail lamp of the front-running vehicle, and the lane can be enhanced.

Further, in the one or more example embodiments, due to the optical property of the capture lens 204, the upside and downside of an image in the image capturing area and the upside and downside of an image in the image sensor 206 become opposite. Therefore, if the lower part of the image capturing area is used as the adhered substance detection image area 214, the upper part of the front-end filter 210 of the optical filter 205 is configured with the cut-filter (FIG. 7) or the band-pass filter (FIG. 8).

The detection of the front-running vehicle can be conducted by recognizing the tail lamp of the front-running vehicle in the captured image. Compared to the headlight of the oncoming vehicle, the light quantity of the tail lamp is small. Further, ambient light such as streetlamp/streetlight or the like may exist in the image capturing area. Therefore, the tail lamp may not be detected with high precision if only the luminance data is used. Therefore, to recognize the tail lamp effectively, spectrum information can be used. For example, based on received light quantity of the red-color light, the tail lamp can be recognized effectively. The rear-end filter 220 of the optical filter 205 may be disposed with a red-color filter or cyan-color filter matched to a color of the tail lamp, which is a filter that can pass through only a wavelength band matched to a color used for the tail lamp, so that the received light quantity of the red-color light can be detected effectively.

However, each of the light receiving elements configuring the image sensor 206 may have sensitivity to infrared light. Therefore, if the image sensor 206 receives light including infrared light, the captured image may become red-color-like image as a whole. Then, it may become difficult to recognize a red-color image portion corresponding to the tail lamp. In view of such issue, the front-end filter 210 of the optical filter 205 includes an area of the infrared cut-filter area 211 for the vehicle detection image area 213. With this configuration, infrared light can be removed from the captured image data used for recognizing the tail lamp, with which the tail lamp can be recognized with enhanced precision.

FIG. 11 illustrates a schematic configuration of the optical filter 205 and the image sensor 206 viewed from a direction perpendicular to the light passing or propagation direction. The image sensor 206 is a sensor employing, for example, a charge coupled device (CCD), a complementary metal oxide semiconductor (CMOS), or the like, and each of the light receiving elements of image sensor 206 employs, for example, a photodiode 206A. The photodiodes 206A are arrayed as a two-dimensional array, in which each photodiode 206A may correspond to each pixel. To enhance the light collection efficiency of the photodiode 206A, a micro lens 206B is disposed at the incidence side of the photodiode 206A. The image sensor 206 can be bonded to a printed wiring board (PWB) using known methods such as wire bonding to configure the sensor board 207. Hereinafter, the photodiode 206A may mean one photodiode or a plurality of photodiodes.

The optical filter 205 is disposed at a close proximity of the micro lens 206B of the image sensor 206. As illustrated in FIG. 11, the rear-end filter 220 of the optical filter 205 includes a translucent filter board 221, a polarized-light filter 222, and a light-separation filter 223. As illustrated in FIG. 11, the rear-end filter 220 employs a multiple-layered structure by forming the polarized-light filter 222 on a translucent filter board 221, and then forming the light-separation filter 223 on the polarized-light filter 222. The polarized-light filter 222 and the light-separation filter 223 are disposed at each segmented area, and each polarized-light filter 222 and each light-separation filter 223 correspond to one of the photodiodes 206A of the image sensor 206.

The optical filter 205 and the image sensor 206 can be arranged in the image capture device 200 by setting a space between the optical filter 205 and the image sensor 206. Further, the optical filter 205 and the image sensor 206 can be arranged in the image capture device 200 by closely contacting the optical filter 205 to the image sensor 206, in which the boundary of the polarized-light filter 222 and the light-separation filter 223 in the optical filter 205 and the boundary of the photodiodes 206A on the image sensor 206 can be matched easily. For example, the optical filter 205 and the image sensor 206 can be bonded, for example, using ultra violet (UV) bonding agent, or the optical filter 205 and the image sensor 206 can be supported with each other by a spacer disposed therebetween at non-pixel areas not used for image capturing while bonding four sides of the optical filter 205 and the image sensor 206 by UV bonding or heat bonding.

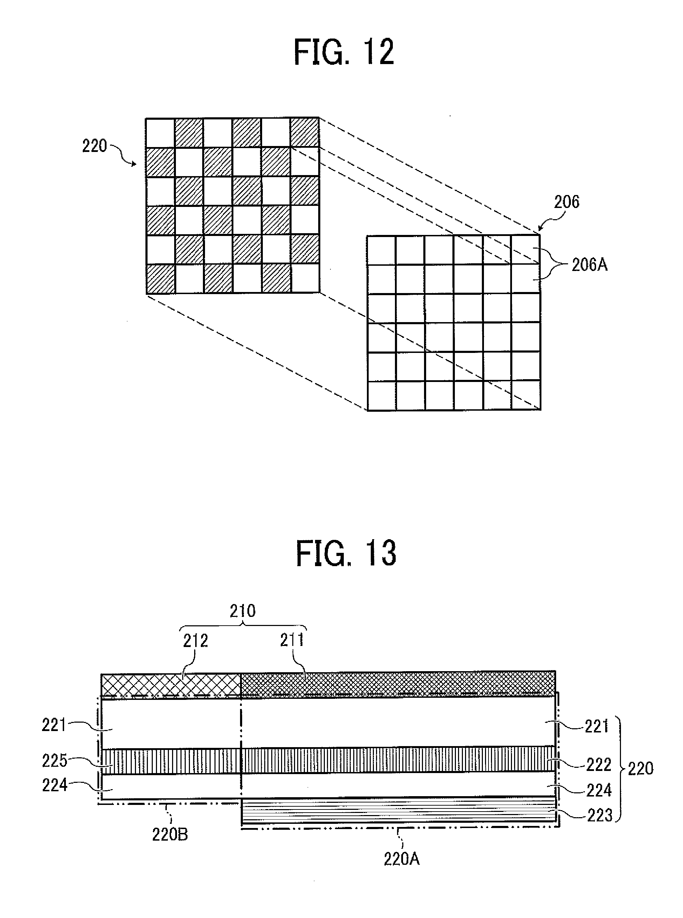

FIG. 12 illustrates an area segmentation pattern of the polarized-light filter 222 and the light-separation filter 223 of the rear-end filter 220 of the optical filter 205. The polarized-light filter 222 includes two type of areas such as a first area and a second area, and the light-separation filter 223 includes two types of areas such as the first area and the second area. The first area and the second area set for the polarized-light filter 222 and the light-separation filter 223 are matched to each corresponding photodiode 206A on the image sensor 206. With this configuration, each photodiode 206A on the image sensor 206 can receive light that passes the first area and second area set for the polarized-light filter 222 or the light-separation filter 223. Depending on the types of area set for the polarized-light filter 222 or the light-separation filter 223, the polarized light information and spectrum information can be obtained by the image sensor 206.

In the one or more example embodiments, the image sensor 206 may use an image capturing element for capturing monochrome images, but the image sensor 206 can use an image capturing element for capturing color images with a use of a color filter disposed for each image capture pixel corresponding to the image capturing element used for color image. When the image capturing element of color images is used, light transmission performance of each polarized-light filter 222 and light-separation filter 223 can be adjusted depending on the property of the color filter.

A description is given of an example configuration of the optical filter 205 with reference to FIG. 13, which illustrates a schematic cross-sectional view of layers of the optical filter 205. The rear-end filter 220 of the optical filter 205 includes a vehicle detection filter 220A and a raindrop detection filter 220B. The vehicle detection filter 220A corresponding to the vehicle detection image area 213, and the raindrop detection filter 220B corresponding to the raindrop detection image area 214 may employ different layer structures. Specifically, the vehicle detection filter 220A includes the light-separation filter 223 while the raindrop detection filter 220B does not include the light-separation filter 223. Further, the vehicle detection filter 220A includes a polarized-light filter 222, and the raindrop detection filter 220B includes a polarized-light filter 225, wherein the polarized-light filter 222 and the polarized-light filter 225 have different structures.

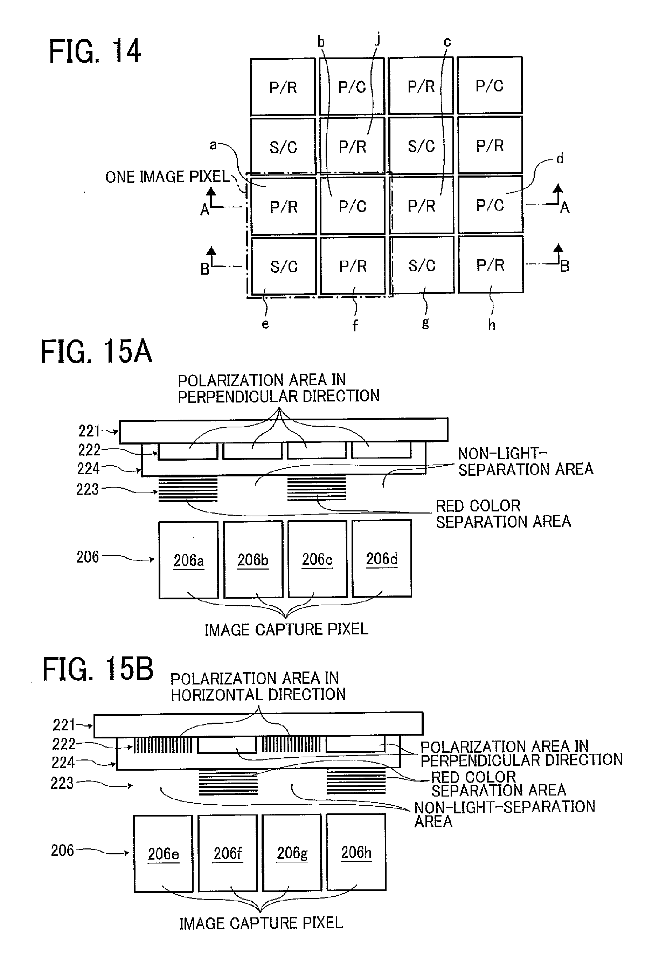

FIG. 14 illustrates an example pixel configuration of the optical filter 205, in which light passes the vehicle detection filter 220A of the optical filter 205 and is then received by each photodiode 206A on the image sensor 206, and information corresponding to the received light or information of each image capture pixel is shown. FIG. 15A illustrates a schematic cross-sectional view of the vehicle detection filter 220A of the optical filter 205 and the image sensor 206 cut at a line A-A shown in FIG. 14. FIG. 15B illustrates a schematic cross-sectional view of the vehicle detection filter 220A of the optical filter 205 and the image sensor 206 cut at a line B-B shown in FIG. 14.

As to the optical filter 205, as illustrated in FIGs. 15A and 15B, the vehicle detection filter 220A employs a multiple-layered structure including the translucent filter board 221, the polarized-light filter 222, and the light-separation filter 223. Specifically, the polarized-light filter 222 is formed on the translucent filter board 221, and the light-separation filter 223 is formed on the polarized-light filter 222. The polarized-light filter 222 has a wire grid structure, and a convex/concave face may be formed at a top of multiple layers of the polarized-light filter 222, which is a bottom side in FIG. 15.

If the light-separation filter 223 is formed on such convex/concave face of the polarized-light filter 222, the light-separation filter 223 may be formed along the convex/concave face, by which the light-separation filter 223 may be formed with uneven thickness layer, with which desired light-separation performance may not be obtained. Therefore, as to the optical filter 205, a top side of layers of the polarized-light filter 222 is filled with a filler agent 224 to form a flat face, and then the light-separation filter 223 is formed on the flat face.

The filler agent 224 is made from materials not having polarization property, by which the polarized-light filter 222 can function effectively because the filler agent 224 that fills the convex/concave face and forms the flat face does not affect the function of the polarized-light filter 222. A flat face processing using the filler agent can be conducted by a known method such as spin-on-glass (SOG) method, which applies the filler agent 224, but not limited thereto.

The first area of the polarized-light filter 222 corresponds to a perpendicular direction polarization light area, in which only the perpendicular polarized light component oscillating in parallel to the image capture pixels, arranged along the vertical row of the image sensor 206 (perpendicular direction), is selectively passed through. The second area of the polarized-light filter 222 corresponds to a horizontal direction polarization light area, in which only the horizontal polarized light component oscillating in parallel to the image capture pixels, arranged along the horizontal row of the image sensor 206 (horizontal direction), is selectively passed through. Further, the first area of the light-separation filter 223 corresponds to a red color separation area to selectively pass through only the light having a red color wavelength band, which is included in the light that has passed through the polarized-light filter 222. Further, the second area of the light-separation filter 223 corresponds to a non-light-separation area to pass through the light without selecting wavelength of light.

As illustrated in FIG. 14, a portion enclosed by a dotted line indicates four image capture pixels "a, b, e, f" that configure one-image pixel for the captured image data. These four image capture pixels "a, b, e, f" include two adjacent pixels in one direction and two adjacent pixels in another one direction.

In a case of FIG. 14, the image capture pixel "a" receives light that has passed through the perpendicular direction polarization light area (i.e., first area) of the polarized-light filter 222 of the optical filter 205 and then passed through the red color separation area (i.e., first area) of the light-separation filter 223. Therefore, the image capture pixel "a" receives the light of the perpendicular polarized light (P in FIG. 14) and the red color wavelength band (R in FIG. 14) as indicated as light P/R.

Further, in the case of FIG. 14, the image capture pixel "b" receives light that has passed through the perpendicular direction polarization light area (i.e., first area) of the polarized-light filter 222 of the optical filter 205 and then passed through the non-light-separation area (i.e., second area) of the light-separation filter 223. Therefore, the image capture pixel "b" receives the light of the perpendicular polarized light (P in FIG. 14) and non-light-separation (C in FIG. 14) as indicated as light P/C.

Further, in the case of FIG. 14, the image capture pixel "e" receives light that has passed through the horizontal direction polarization light area (i.e., second area) of the polarized-light filter 222 of the optical filter 205 and then passed through the non-light-separation area (i.e., second area) of the light-separation filter 223. Therefore, the image capture pixel "e" receives the light of the horizontal polarized light (S in FIG. 14) and non-light-separation (C in FIG. 14) as indicated as light S/C.

Further, in the case of FIG. 14, the image capture pixel "f" receives light that has passed through the perpendicular direction polarization light area (i.e., first area) of the polarized-light filter 222 of the optical filter 205 and then passed through the red color separation area (i.e., first area) of the light-separation filter 223. Therefore, similar to the image capture pixel "a," the image capture pixel "f" receives the light of the perpendicular polarized light (P in FIG. 14) and of the red color wavelength band (R in FIG. 14) as indicated as light P/R.

With this configuration, following images can be obtained. Based on output signals of the image capture pixel "a" and the image capture pixel "f," the perpendicular polarized light image of red-color light for one-image pixel can be obtained; based on output signals of the image capture pixel "b," the perpendicular polarized light image of non-separated light for one-image pixel can be obtained; and based on output signals of the image capture pixel "e," the horizontal polarized light image of non-separated light for one-image pixel can be obtained. Therefore, three types of captured image data can be obtained by one-time image capturing operation, wherein three types of captured image data are the perpendicular polarized light image of red-color light, the perpendicular polarized light image of non-separated light, and the horizontal polarized light image of non-separated light.

As to these captured image data, the number of image pixels becomes smaller than the numbers of image capture pixels, in which an image having a higher resolution level can be obtained by known methods such as image interpolation technique.

For example, when to obtain the perpendicular polarized light image of red-color light having a higher resolution level for one image pixel, as to image pixels corresponding to the image capture pixels "a" and "f," information of the perpendicular polarized light image for red-color light received by the image capture pixels "a" and "f" are used as they are, and as to an image pixel corresponding to the image capture pixel "b," an average value of the image capture pixels "a, c, f, j" surrounding the image capture pixel "b" is used as information of the perpendicular polarized light component P for red-color light.

Further, when to obtain the horizontal polarized light image of non-separated light having a higher resolution level for one image pixel, as to an image pixel corresponding to the image capture pixel "e," information of the horizontal polarized light component S of non-separated light received by the image capture pixel "e" is used as it is, and as to image pixels corresponding to the image capture pixels "a, b, f," an average value of the horizontal polarized light component S of non-separated light of the image capture pixels "e, g," surrounding the image capture pixels "a, b, f," is used, or the horizontal polarized light component S of non-separated light of the image capture pixel "e" is used.

The perpendicular polarized light image of red-color light, which can be obtained as above describe, can be used for the recognition of the tail lamp. Because the horizontal polarized light component S is cut from the perpendicular polarized light image of red-color light, a red-color image, having suppressed external disturbance caused by the red color light having the horizontal polarized light component S having high intensity, can be obtained, wherein the red color light having the horizontal polarized light component S having high intensity may be red color light reflected from the road surface, and red color light reflected from the dash board or instrument panel disposed in the vehicle 100 and observed as a ghost image. Therefore, by using the perpendicular polarized light image of red-color light for the recognition process of the tail lamp, the recognition performance of the tail lamp can be enhanced.

Further, the perpendicular polarized light image of non-separated light, for example, can be used for recognition of the lane (e.g., white line) and the headlight of the oncoming vehicle. Because the horizontal polarized light component S is cut from the horizontal polarized light image of non-separated light, a non-separated light image, having suppressed external disturbance caused by white light having the horizontal polarized light component S having high intensity, can be obtained, wherein the white light having the horizontal polarized light component S having high intensity may be light of headlight or streetlamp/streetlight reflected from the road surface, or a white light reflected from the dash board or instrument panel disposed in the vehicle 100 and observed as a ghost image.

Therefore, by using the perpendicular polarized light image of non-separated light for the recognition process of the lane (e.g., white line) and the headlight of the oncoming vehicle, the recognition performance of the lane (e.g., white line) and the headlight of the oncoming vehicle can be enhanced. Especially, on the wet road, reflection light reflected from a wet area (e.g., water surface) covering the road surface has a greater amount of the horizontal polarized light component S. Therefore, by using the perpendicular polarized light image of non-separated light for the recognition process of the lane (e.g., white line), the lane under the wet area of the wet road can be effectively recognized, by which the recognition performance of the lane and the headlight of the oncoming vehicle can be enhanced.

Further, the perpendicular polarized light image of non-separated light and the horizontal polarized light image of non-separated light can be compared with each other for each one of pixels, and a compared result can be used as pixel value or pixel index value. For example, as described later, by using the pixel index value, a metal object in the image capturing area, wet/dry conditions of the road surface, an object such as three-dimensional object in the image capturing area, and the lane (e.g., white line) on the wet road can be recognized with high precision.

The captured images can be used as comparing images, which can be prepared and compared as follows; 1) a difference between a pixel value of the perpendicular polarized light image of non-separated light and a pixel value of the horizontal polarized light image of non-separated light is used as difference-based image; 2) a ratio between a pixel value of the perpendicular polarized light image of non-separated light and a pixel value of the horizontal polarized light image of non-separated light is used as a ratio-based image; and 3) a difference of a pixel value of the perpendicular polarized light image of non-separated light and a pixel value of the horizontal polarized light image of non-separated light is divided by a sum of the pixel value of the perpendicular polarized light image of non-separated light and the pixel value of the horizontal polarized light image of non-separated light, and this ratio of different polarization lights, which may be referred to as polarization index (S-P)/(S+P), is used as a polarization-light-based image.

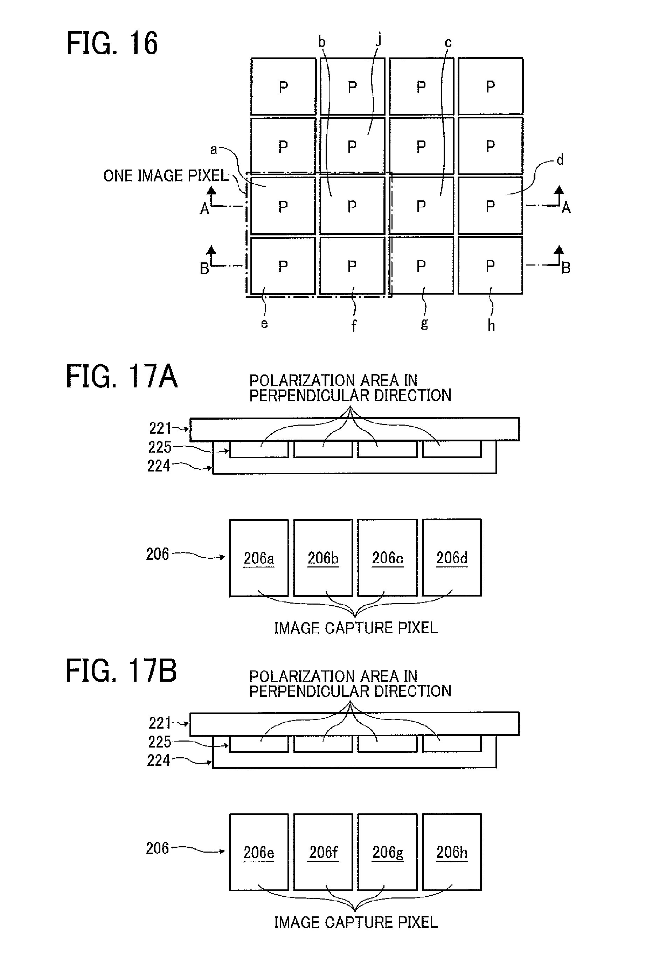

FIG. 16 illustrates an example pixel configuration of the optical filter 205, in which light passes the raindrop detection filter 220B of the optical filter 205, and then received by each photodiode 206A on the image sensor 206, in which information of each one of image capture pixels corresponding to the received light amount are shown. FIG. 17A illustrates a schematic cross-sectional view of the raindrop detection filter 220B of the optical filter 205, and the image sensor 206 cut at a line A-A shown in FIG. 16. FIG. 17B illustrates a schematic cross-sectional view of schematic cross-sectional view of the raindrop detection filter 220B of the optical filter 205, and the image sensor 206 cut at a line B-B shown in FIG. 16.

As to the optical filter 205, as illustrated in FIGs. 17A and 17B, the raindrop detection filter 220B employs a multiple-layered structure including the translucent filter board 221, and the polarized light filter 225. The translucent filter board 221 is used as a common board for the vehicle detection filter 220A and the raindrop detection filter 220B. The polarized light filter 225 has a wire grid structure.

As similar to the polarized-light filter 222 set for the vehicle detection filter 220A, a top side of layers of the polarized light filter 225 is filled with the filler agent 224 to form a flat face, in which the polarized-light filter 222 and the polarized light filter 225 may be filled with the filler agent 224 to form the flat face thereon. However, different from the vehicle detection filter 220A, the light-separation filter 223 is not formed for the raindrop detection filter 220B.

In the one or more example embodiments, an object disposed inside the vehicle 100 may be projected on the inner face of the windshield 105 as a ghost image. This ghost image may occur when light coming from the object regularly reflects on the inner face of the windshield 105. Because this ghost image is generated by the regular reflection light, the ghost image may become ambient light having relatively greater light intensity. Therefore, if the ghost image is projected with the raindrop image on the raindrop detection image area 214, the precision of raindrop detection deteriorates.

Further, when the light emitted from the light source unit 202 is regularly reflected at the inner face of the windshield 105, this regular reflection light may be projected on the raindrop image on the raindrop detection image area 214, and this regular reflection light also becomes the ambient light, and thereby the precision of raindrop detection deteriorates.

The ambient light that degrades the precision of raindrop detection may be regular reflection light reflected regularly at the inner face of the windshield 105. Therefore, most of the polarization light component of the ambient light is a polarization light component having a polarization direction that is perpendicular with respect to the incidence plane of light, which means the ambient light has the horizontal polarized light component S that oscillates in parallel to the horizontal row of image capture pixels of the image sensor 206 (horizontal direction).

Therefore, ass to the optical filter 205, the polarized light filter 225 disposed for the raindrop detection filter 220B is set with a transmission axis that passes through only the perpendicular polarized light component P that oscillates in perpendicular direction, wherein the perpendicular polarized light component P, which oscillates in parallel along the vertical row of image capture pixels of the image sensor 206, corresponds to a polarization light component having a polarization light direction parallel to a virtual plane (or incidence plane of light) including an optical axis of light emitted from the light source unit 202 to the windshield 105, and an optical axis of the capture lens 204.

With this configuration, the light that passes through the polarized light filter 225, disposed for the raindrop detection filter 220B, is only the perpendicular polarized light component P. The ambient light may occur as a ghost image projected on the inner face of the windshield 105, and as a regular reflection light, generated when the light emitted from the light source unit 202 is reflected regularly on the inner face of the windshield 105, and most of the polarization light component of the ambient light is the horizontal polarized light component S. Since the above configuration described with reference to FIGs. 16 and 17 can cut the horizontal polarized light component S, the raindrop detection image area 214 can use a perpendicular polarized light image prepared from the perpendicular polarized light component P, which has reduced the effect of the ambient light. Therefore, the precision of raindrop detection conducted based on the image data captured for the raindrop detection image area 214 can be enhanced.

In the above described configuration, the front-end filter 210 includes the infrared cut-filter area 211 and the infrared transmittance-filter area 212 having a multi-layered film structure, and the infrared cut-filter area 211 and the infrared transmittance-filter area 212 have different layered structures. For example, the front-end filter 210 can be manufactured as follows by the vacuum deposition. At first, the infrared transmittance-filter area 212 is formed by the vacuum deposition while masking the portion of the infrared cut-filter area 211. Then, while masking the infrared transmittance-filter area 212, the infrared cut-filter area 211 is formed by the vacuum deposition.

Further, the polarized-light filter 222 of the vehicle detection filter 220A and the polarized light filter 225 of the raindrop detection filter 220B employ the wire grid structure, in which the vehicle detection filter 220A and the raindrop detection filter 220B are segmented into in two dimensional direction (area segmentation). The polarized-light filter 222 is segmented using two types of areas, in which one area is used for a perpendicular direction polarization light area, and another area is used for a horizontal direction polarization light area. Each of the areas may correspond to each corresponding image capture pixel. A transmission axis of perpendicular direction polarization light area and a transmission axis of the horizontal direction polarization light area extend in directions that are perpendicular with each other. Further, the polarized light filter 225 is segmented using one type of area, in which the area has a transmission axis that passes only the perpendicular polarized light component P. The polarized-light filters 222 and 225 employing different structures can be formed on the same translucent filter board 221 using, for example, a template for metal wire patterning used for forming a wire grid structure, in which by adjusting a groove direction, an adjustment of long side direction of the metal wire for each area can be conducted easily.

Further, in the one or more example embodiments, the infrared cut-filter area 211 may not be disposed for the optical filter 205. Instead, the infrared cut-filter area 211 can be disposed for the capture lens 204, by which the optical filter 205 can be manufactured easily.

Further, the infrared cut-filter area 211 may not be disposed for the front-end filter 210. For example, a light separation filter that can pass through only the perpendicular polarized light component P can be formed on the raindrop detection filter 220B of the rear-end filter 220, in which the infrared cut-filter area 211 is not formed for the front-end filter 210. Further, the polarized-light filter is not required to be disposed in some cases. Further, as to the optical filter 205, as illustrated in FIG. 11, the rear-end filter 220 having the polarized-light filter 222 and the light-separation filter 223, divided into areas as illustrated in FIG. 11, is disposed at a position close to the image sensor 206 compared to the front-end filter 210, but the front-end filter 210 can be disposed at a position close to the image sensor 206 compared to the rear-end filter 220.

(Light control of headlight)

A description is given of the light control of headlight in the one or more example embodiments. As to the light control of headlight, captured image data captured by the image capture device 200 is analyzed to recognize the tail lamp and/or the headlight of vehicles, in which the front-running vehicle is detected from the recognized tail lamp, and the oncoming vehicle is detected from the recognized headlight. Then, a switching control of high beam/low beam of the headlight 104 is conducted, and/or a light-dimming control is partially conducted for the headlight 104 to prevent a projection of strong light of the headlight of the vehicle 100 to eyes of drivers of the front-running vehicle and the oncoming vehicle, with which the drivers of other vehicles are not dazzled by the headlight of the vehicle 100 while providing an enough field of view for the driver of vehicle 100.

The light control of headlight of the vehicle 100 can be conducted using information obtained from the image capturing unit 101. The information may be intensity of light coming from each point such as light emitting object/light reflecting object present in the image capturing area (brightness information); distance between other vehicles having the light emitting object such as the headlight and the tail lamp and the vehicle 100 (distance information); spectrum information obtained by comparing red color component of light and white light (i.e., non-separated light) coming from each of light emitting object/light reflecting object; polarized light information obtained by comparing the horizontal polarized light component and the perpendicular polarized light component of white light; perpendicular polarized light information of white light having cut the horizontal polarized light component; and the perpendicular polarized light component information of red color having cut the horizontal polarized light component.

The brightness information can be used as follows. In the night time, if the front-running vehicle and the oncoming vehicle are present at the same distance from the vehicle 100, the image capture device 200 captures the front-running vehicle and the oncoming vehicle. In such a case, the headlight of the oncoming vehicle, one of the detection-target objects, is recognized as the brightest image in the captured image data, and the tail lamp of the front-running vehicle, another one of the detection-target objects, is recognized as an image, which is darker than the image of the headlight of the oncoming vehicle. Further, the image of the reflector can be recognized as an image in the captured image data. Since the reflector itself does not emit light but only reflects light coming from the headlight of the vehicle 100, the image of the reflector in the captured image data becomes darker than the image of the tail lamp of the front-running vehicle. Further, the headlight of the oncoming vehicle, the image of the light coming from the tail lamp of the front-running vehicle, and the image of the light coming from the reflector received by the image sensor 206 become darker gradually as the distance between the vehicles longer. Therefore, by using the brightness information (or luminance information) obtained from the captured image data, detection-target objects such as headlight and tail lamp, and the reflector can be recognized effectively.

Further, the distance information can be used as follows. Typically, the headlight and the tail lamp include a pair of lamps or lights disposed at a right position and a left position. Such configuration can be used to compute the distance between the headlight and/or the tail lamp of other vehicles and the vehicle 100. Images of the pair of lamps disposed right and left captured by the image capture device 200 and recognized as the captured image data includes one image for one lamp, and another one image for another one lamp. The two images may be present at a close proximity position with each other and at the same height position. Further, a lamp image area for each concerned lamp is almost same size, and a shape of the concerned lamp image area for each concerned lamp is almost same. Therefore, if such features are used as conditions, the lamp image areas that satisfy such conditions can be recognized as pair-lamps. Further, the greater the distance, the left and right lamps of the pair-lamps cannot be recognized separately, but may be recognized as a single lamp.

When the pair-lamps can be recognized with the above described method, the distance to the pair-lamps such as the headlights and the tail lamps can be computed. For example, the distance of the left and right lights of the headlights and the distance of the left and right lamps of the tail lamps can be set to a constant value w0 (e.g., 1.5 m). Since the focus distance f of the capture lens 204 of the image capture device 200 is known, by computing the distance w1 between two lamp image areas on the captured image data, corresponding the left and right lamps/lights, captured by the image sensor 206 of the image capture device 200, the distance X between the pair-lamps such as the headlight and the tail lamp of other vehicles and the vehicle 100 can be computed as "X = fx w0/w1," which is a simple proportional calculation. If the computed distance X is within a suitable range, the two lamp image areas can be recognized as the headlight or the tail lamp of other vehicles. Therefore, by using such distance information, the recognition precision of the detection-target object (e.g., headlight, tail lamp) can be enhanced.

Further, spectrum information can be used as follows. As described above, the image capture pixels such as "a, c, f, h" of the image sensor 206 (FIG. 14) receive the perpendicular polarized light component of red color light (P/R). By extracting only the pixel data of (P/R) from the captured image data captured by the image capture device 200, a red color image using only red color component present in the image capturing area can be generated. Therefore, if an image area of red color image has a light intensity greater than a given level of light intensity, such image area can be recognized as the tail lamp image area corresponding to the tail lamp.

Further, as described above, the image capture pixels such as "b, d" of the image sensor 206 (see FIG. 14) receive the perpendicular polarized light component of white light such as non-separated light (P/C). By extracting only the pixel data of (P/C) from the image data captured by the image capture device 200, a perpendicular polarized light component of a monochrome luminance image present in the image capturing area can be generated. Therefore, an intensity ratio such as red color luminance ratio between an image area of the red color image, and an image area of the monochrome luminance image can be computing by comparing the image areas. Based on the red color luminance ratio, the relative ratio of the red color component in the light coming from an object such as light emitting object/light reflecting object, present in the image capturing area, can be computed. The red color luminance ratio of the tail lamp can be too high compared to the light coming from the headlight, or the light coming from other light emitting object/light reflecting object. Therefore, the recognition precision of the tail lamp can be enhanced by using the red color luminance ratio.

Further, the polarized light information can be used as follows. Based on the image data captured by the image capture device 200, the image capture pixels such as "b, d" of the image sensor 206 (FIG. 14) receive the perpendicular polarized light component of white light (i.e., non-separated light) (P/C), and the corresponding pixel data are extracted, and the image capture pixels such as "e, g" the image sensor 206 (FIG. 14) receive the horizontal polarized light component of white light (i.e., non-separated light) (S/C), and the corresponding pixel data are extracted. Then, pixel values (luminance) of each one of image pixels between the extracted pixel data are compared to obtain a comparing image. Specifically, for example, a difference of "S-P" between the perpendicular polarized light component P of white light (non-separated light) and the horizontal polarized light component S of white light (non-separated light) can be used as a difference of image (comparing images). Based on the comparing image, the contrast between a direct light image area such as headlight image area, in which light of the headlight enters the image capture device 200 directly, and an indirect light image area such as reflection light image area, in which the reflection light of the headlight reflected at water surface of wet road enters the image capture device 200, can be set greater, by which the recognition precision of headlight can be enhanced.

The comparing image may be a ratio(S/P)-based image or a polarization-light-based image using the polarization index of (S-P)/(S+P) obtained from a pixel value of the perpendicular polarized light component P of white light (i.e., non-separated light) and from a pixel value of the horizontal polarized light component S of white light (i.e., non-separated light).

In general, light reflected on a horizontal mirror surface such as water surface has the horizontal polarized light component having greater intensity. When the ratio (S/P) or the polarization index (S-P)/(S+P) of the horizontal polarized light component S and the perpendicular polarized light component P is computed, the ratio (S/P) or the polarization index (S-P)/(S+P) becomes greatest at a specific angle (Brewster's angle).

For example, when the road is wet, the asphalt face (or dispersing face) covered by water becomes a nearly mirror surface, by which reflection light of the headlight reflected from the road surface has the horizontal polarized light component S having greater intensity as dominant component. Therefore, as for the indirect image area of the reflection light of headlight from the road surface, the ratio-based image or the polarization-light-based image has a greater pixel value (luminance). By contrast, as for the direct image area of the light from headlight (non-polarized light), the ratio-based image or the polarization-light-based image has a smaller pixel value (luminance). Based on this difference, the reflection light of headlight (i.e., indirect light) reflected from the wet road surface having the same level of the light intensity of the direct light coming from headlight can be effectively removed, by which the direct light coming from headlight can be recognized separately from the reflection light of headlight (i.e., indirect light) reflected from the wet road surface.

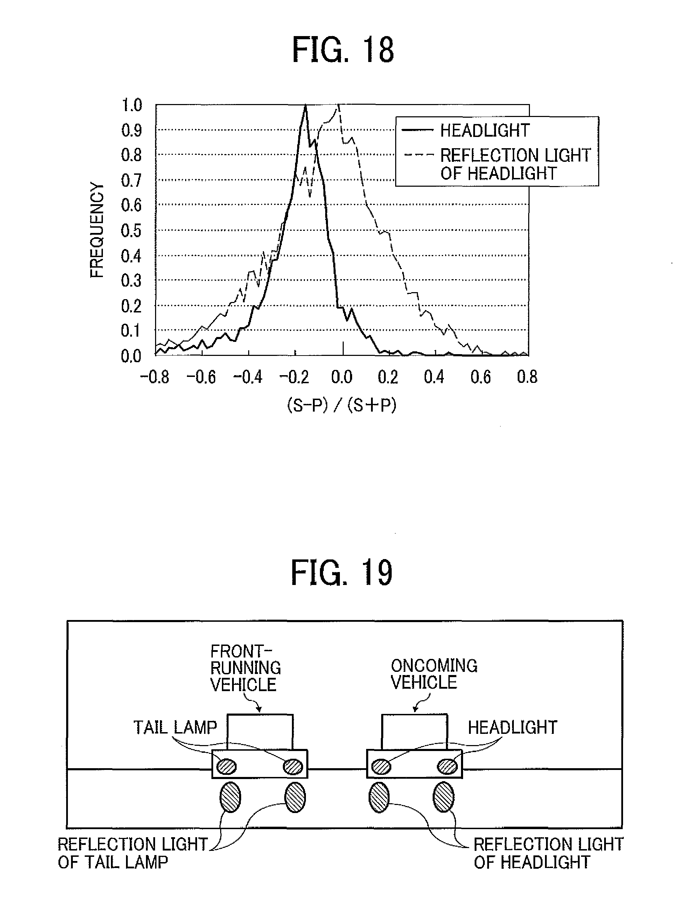

FIG. 18 illustrates a histogram of computed polarization index (S-P)/(S+P) of the direct light coming from the headlight, and the reflection light of headlight reflected from a wet road surface in rainy weather, wherein light images were captured by the image capture device 200. The vertical axis of FIG. 18 indicates the frequency normalized to one. The horizontal axis of FIG. 18 indicates the polarization index (S-P)/(S+P). As illustrated in FIG. 18, the profile of the reflection light of the headlight reflected from the wet road is shifted to the right side in FIG. 18 compared to the direct light from the headlight, which indicates that the horizontal polarized light component S becomes relatively greater for the reflection light of the headlight.

FIG. 19 illustrates a schematic image captured by the image capture device 200 when a front-running vehicle and an oncoming vehicle are both present at almost the same distance in a forward direction of the vehicle 100, wherein all vehicles are present on a wet road. In this situation, it is difficult to separately detect the tail lamp of the front-running vehicle, the reflection light of tail lamp light reflected from the wet road surface (i.e., indirect light), the headlight of the oncoming vehicle, and the reflection light of headlight light reflected from the wet road surface (i.e., indirect light) using only the brightness information and distance information.

Even in such a situation, by using the above described spectrum information, the tail lamp of the front-running vehicle and the reflection light of tail lamp light reflected from the wet road surface (i.e., indirect light) can be separately recognized with high precision, and the headlight of the oncoming vehicle and the reflection light of headlight light reflected from the wet road surface (i.e., indirect light) can be separately recognized with high precision.

Specifically, the lamp image area is extracted by using the brightness information and distance information, and if an image area is computed to have the pixel value (luminance value) of red color image exceeding a given threshold value, or to have the red color luminance ratio exceeding a given threshold value, the image area can be recognized as the tail lamp image area, capturing the tail lamp of the front-running vehicle or the reflection light of tail lamp light reflected from the wet road surface (i.e., indirect light). Further, if an image area is computed to have the pixel value (luminance value) of red color image smaller than the threshold value, or to have the red color luminance ratio smaller than the threshold value, the image area can be recognized as the headlight image area capturing the headlight of the oncoming vehicle, or the reflection light of headlight reflected from the wet road surface (i.e., indirect light).

Further, as to the one or more example embodiments, by applying the above described polarized light information to each lamp image area recognized by using the spectrum information, the direct light from the tail lamp and/or headlight, and the reflection light from objects (i.e., indirect light) can be separately recognized with high precision.

Specifically, for example, as for the tail lamp, based on the pixel value (luminance value) of the horizontal polarized light component S of red color image, or the polarization index (S-P)/(S+P) of red color image, the difference of the frequency and intensity of the horizontal polarized light component is obtained, by which the direct light from the tail lamp of the front-running vehicle, and the reflection light of the tail lamp (i.e., indirect light) reflected from the wet road can be separately recognized.

Further, for example, as for the headlight, based on the pixel value (luminance value) of the horizontal polarized light component S of white color image, or the polarization difference of white color image, or the polarization index (S-P)/(S+P) of white color image, the difference of the frequency and intensity of the horizontal polarized light component is obtained, by which the direct light from the headlight of the front-running vehicle, and the reflection light of the headlight (i.e., indirect light) reflected from the wet road can be separately recognized

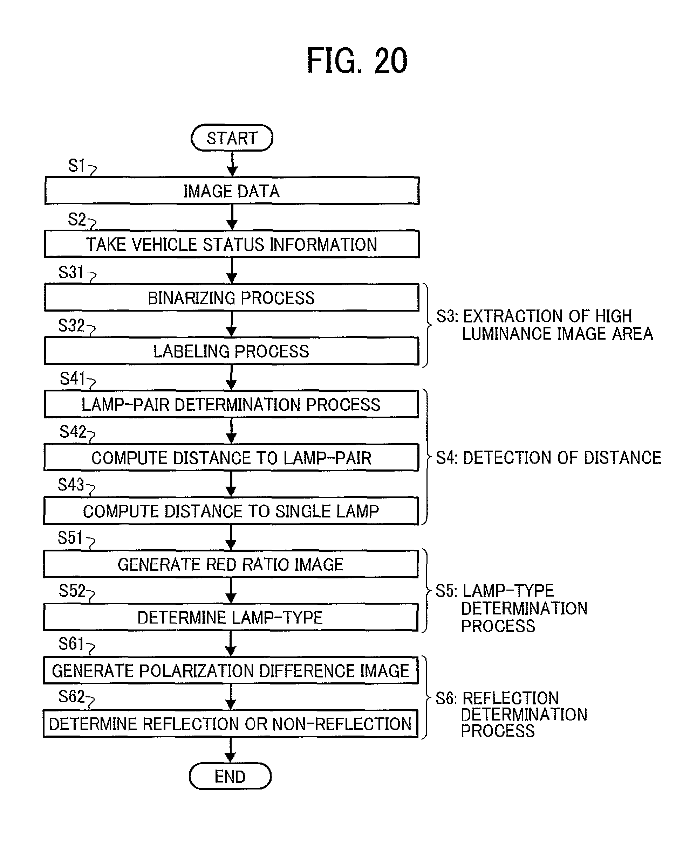

A description is given of a process of detecting a front-running vehicle and an oncoming vehicle with reference to FIG. 20, which is a flowchart showing the steps of a process of detecting a vehicle. In the process of detecting vehicles, image data captured by the image capture device 200 receives an image processing, and then an image area, which may be presumed to include a detection-target object, is extracted. Then, by recognizing the types of light emitting object/light reflecting object captured in the extracted image area, the detection of the front-running vehicle and the oncoming vehicle is conducted, in which the light emitting object/light reflecting object is a detection-target object (e.g., tail lamp of front-running vehicle, headlight of oncoming vehicle).

At step S1, image data captured by the image sensor 206 of the image capture device 200 of the vehicle 100 is taken or stored in a memory, wherein the captured image data may be an image of forward direction of the vehicle 100. As above described, the image data includes signals indicating the light intensity (luminance) of each image capture pixel of the image sensor 206. At step S2, the vehicle status information of the vehicle 100 is taken using a vehicle status sensor.

At step S3, a high luminance image area, which may be presumed to include a detection-target object (e.g., tail lamp of front-running vehicle, headlight of oncoming vehicle), is extracted from the image data stored in the memory. In the image data, such high luminance image area is an area having a luminance greater than a given threshold luminance value, and a plurality of areas may present as the high luminance image area, and all of high luminance image areas are extracted. Therefore, at step S3, image areas capturing the reflection light reflected from the wet road (i.e., indirect light) are also extracted as the high luminance image area.

In the extraction process of the high luminance image area, at step S31, a luminance value at each image capture pixel on the image sensor 206 is compared with a given threshold luminance value, and then receives a binarizing process. Specifically, an image capture pixel having a luminance greater than the given threshold luminance value is assigned with "1", and an image capture pixel having a luminance smaller than the given threshold luminance value is assigned with "0" to generate a binarized image.

At step S32, when pixels assigned with "1" in the binarized image are close to each other, such pixels are recognized as one high luminance image area, which may be referred to as a labeling process. By conducting the labeling process, a group composed of a plurality of pixels having high luminance and existing in the close proximity positions can be extracted as one high luminance image area.

After the extraction process of the high luminance image area, at step S4, the distance detection or computing process is conducted, in which the distance between the vehicle 100 and objects in the image capturing area, corresponding to the each of the extracted high luminance image areas, is computed. In this distance computing process, a pair-lamps distance computing process and a single lamp distance computing process may be conducted. In the pair-lamps distance computing process, the distance is detected using a configuration that a light or lamp of vehicle includes a pair of lamps (i.e., one at left and another at right). In the single lamp distance computing process, the concerned pair-lamps may be recognized as a single lamp when the left and right lamps of the pair-lamps cannot be separately recognized because the concerned vehicle is present at a far distance.

Before the pair-lamps distance computing process, at step S41, a lamp-pair determination process is conducted to determine whether the pair-lamps are present. In the image data captured by the image capture device 200, images of a pair of lamps disposed at right and left may be positioned at close proximity with each other and at the substantially same height position while the area of the high luminance image areas have almost the same size, and the shape of high luminance image areas are almost the same. If the high luminance image areas satisfy such conditions, such high luminance image areas can be determined as the pair-lamps. If the high luminance image area is not presumed as a pair of images, such high luminance image area may be determined as a single lamp.

When it is determined as the pair-lamps, at step S42, the distance to the pair-lamps is computed (pair-lamps distance computing process). The distance to the pair-lamps can be computed using followings: the distance between the left and right lights of the headlight and distance between the left and right lamps of the tail lamp can be set to a constant value $w0$ (e.g., 1.5 m); the focus distance $f$ of the capture lens 204 of the image capture device 200 is known; the distance $w1$ between two lamp image areas on the captured image data, corresponding the left and right lamps/lights, captured by the image sensor 206 of the image capture device 200 can be computed; then, distance $X$ between the pair-lamps of other vehicle and the vehicle 100 can be computed as "$X = fx\,w0/w1$," which is a simple proportional calculation. Further, the distance to the front-running vehicle and the oncoming vehicle can be detected using a laser radar/milliwave radar and specific distance detector or sensor.

At step S5, a lamp-type determination process is conducted, in which a ratio such as red color luminance ratio between the perpendicular polarized light component P of red color image and the perpendicular polarized light component P of white color image is used as spectrum information. Based on the spectrum information, it is determined whether the two high luminance image areas, determined as the pair-lamps, correspond to the light from the headlight, or the light from the tail lamp (lamp-type determination process).

In the lamp-type determination process, at step S51, for the high luminance image areas determined as the pair-lamps, a ratio between pixel data corresponding to the image capture pixels "a, f" of the image sensor 206 (FIG. 14) and pixel data corresponding to the image capture pixels "b" of the image sensor 206 (FIG. 14) is computed to prepare a pixel value of the red-ratio-based image.

At step S52, the pixel value of the red-ratio-based image is compared with a given threshold value. When the pixel value of the high luminance image area is a given threshold value or more, such high luminance image area is determined as the tail lamp image area, corresponding to the light from the tail lamp, and when the pixel value of the high luminance image area is less than the given threshold value, such high luminance image area is determined as the headlight image area, corresponding to the light coming from the headlight.

At step S6, an indirect reflection determination process is conducted for each image area, which is determined as the tail lamp image area or the headlight image area, using the polarization index (S-P)/(S+P) as the polarized light information, in which it is determined whether the received light is a direct light such as from light coming from the tail lamp or from headlight, or a reflection light such as light reflected from a mirror surface on a wet road surface (i.e., indirect light).

In the indirect reflection determination process, at step S61, the polarization index (S-P)/(S+P) for the tail lamp image area is computed, and the computed polarization index (S-P)/(S+P) is used as a pixel value to prepare the polarization-light-based image. Further, the polarization index (S-P)/(S+P) for the headlight image area is computed, and the computed polarization index (S-P)/(S+P) is used as a pixel value to prepare the polarization-light-based image.

At step S62, a pixel value of such polarization-light-based image is compared with a given threshold value. If the pixel value of the tail lamp image area or the headlight image area is a given threshold value or more, such tail lamp image area or the headlight image area can be determined as an area corresponding to light reflected from an object (i.e., indirect light). Then, such image area is determined as an area not capturing the tail lamp of the front-running vehicle or the headlight of the oncoming vehicle, and then removed from the tail lamp image area and the headlight image area. After conducting such removing process, the remaining tail lamp image area and the headlight image area can be determined as an area of the tail lamp of the front-running vehicle or the headlight of the oncoming vehicle.

Further, a rain sensor can be disposed on the vehicle, in which only when the rain sensor detects rainy weather, the indirect reflection determination process (S6) may be conducted. Further, only when a driver activates a wiper, the indirect reflection determination process (S6) may be conducted. As such, only when the rainy weather that reflection from objects (i.e., indirect light) is expected, the indirect reflection determination process (S6) may be conducted.

The detection result of the front-running vehicle and the oncoming vehicle obtained by the vehicle detection process can be used for the light control of headlight of the vehicle 100 having the vehicle-mounted devices. Specifically, when the tail lamp is detected by the vehicle detection process, and the distance to the front-running vehicle becomes a given distance that the headlight of the vehicle 100 may project to a rear-view mirror of the front-running vehicle, a part of the headlight of the vehicle 100 is blocked, or the light-emitting direction of the headlight of the vehicle 100 is deviated to the upward/downward direction or the left/right direction to prevent such projection of the headlight of the vehicle 100 to the front-running vehicle.

Further, when the headlight of the oncoming vehicle is detected by the vehicle detection process, and the distance to the oncoming vehicle becomes a distance that the headlight of the vehicle 100 may hits a driver of the oncoming vehicle, a part of the headlight of the vehicle 100 is blocked, or the light-emitting direction of the headlight of the vehicle 100 is deviated to the upward/downward direction or the left/right direction to prevent such hitting of the headlight of the vehicle 100 to the oncoming vehicle.

(Detection process of lane)

A description is given of detection process of the lane (e.g., white line). The detection of the lane (i.e., detection-target object) is conducted to prevent departure or deviation of the vehicle 100 from a driving lane. The lane means any types of lanes (e.g., white line) for defining road area such as solid line, dashed line, dotted line, double lines, or the like. Further, the lanes other than white line such as yellow line can be detected similarly.

In the detection process of the lane, among the information that can be acquired from the image capturing unit 101, the polarized light information obtained as the perpendicular polarized light component P of white light (i.e., non-separated light) can be used. Further, the perpendicular polarized light component P of white light (i.e., non-separated light) may include the perpendicular polarized light component P of cyan light.

Typically, the reflection light reflected from the lane, and the reflection light reflected from the asphalt face may show a luminance profile, which may be substantially flat spectrum in the visible light range. Since the cyan light includes light having a wide range of wavelength in the visible light range, the cyan light can be preferably used for capturing images of the asphalt face and the lane (e.g., white line). Therefore, by using the optical filter 205 of the second example configuration, the perpendicular polarized light component P of cyan light is included in the perpendicular polarized light component P of white light (i.e., non-separated light), by which the numbers of image capture pixels useable for the detection process can be increased, and thereby the resolution level can be enhanced, and the lane at a far distance point can be detected.

In the detection process of the lane such as white line present on roads, the lane is formed on the road surface having a color close to black. Therefore, the luminance of the lane becomes greater than the luminance of other portion of the road surface in an image of the perpendicular polarized light component P of white light (i.e., non-separated light). Therefore, if the luminance of one portion is greater than a given value, such portion can be determined and detected as the lane. Since the horizontal polarized light component S is cut from the image of perpendicular polarized light component P of white light (i.e., non-separated light) used for the detection process, the light reflection from the wet road can be suppressed, and an image suppressing the effect of indirect light such as the light reflection from the wet road can be captured. Therefore, the ambient light such as the reflection light of headlight reflected from the wet road (i.e., indirect light) in the night time may not be recognized as the lane, and thereby the lane can be detected effectively without miss-recognition.

Further, in the detection process of the lane, among information obtainable from the image capturing unit 101, polarized light information obtained by comparing the horizontal polarized light component S of white light (i.e., non-separated light) and the perpendicular polarized light component P of white light (i.e., non-separated light) can be also used. Specifically, the polarization index (S-P)/(S+P) can be computed using the horizontal polarized light component S and the perpendicular polarized light component P of white light (i.e., non-separated light). Typically, the reflection light reflected from the lane includes the diffuse reflection component as a dominant component, in which the perpendicular polarized light component P and the horizontal polarized light component S of the reflection light becomes almost the same, and thereby the polarization index (S-P)/(S+P) becomes nearly zero. By contrast, the reflection light reflected from the asphalt face having not formed with the lane (e.g., white line) includes the diffuse reflection component as a dominant component under the dry condition, and the polarization index (S-P)/(S+P) becomes a positive value. Further, the reflection light reflected from the asphalt face having not formed with the lane (e.g., white line) includes the regular reflection component as a dominant component under the wet condition, by which the polarization index (S-P)/(S+P) becomes further great value. Therefore, if the polarization index (S-P)/(S+P) of one portion of the road surface is smaller than a threshold value, such portion can be determined as the lane (e.g., white line).

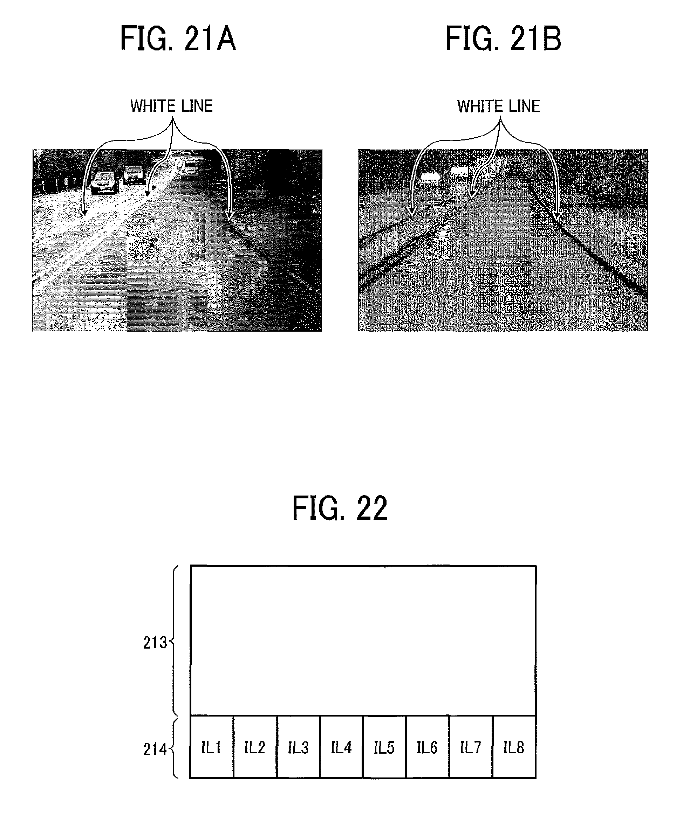

FIGs. 21A and 21B are example photos captured for the same image capturing area under the rainy weather, in which FIG. 21A illustrates a monochrome luminance image of non-separated light/non-polarized light, and FIG. 21B illustrates a polarization-light-based image of non-separated light. The image capturing area is relatively dark because the image was captured when the vehicle 100 was running in the rainy weather, and further, the road surface was at the wet condition. Therefore, in the monochrome luminance image of FIG. 21A, the contrast between the road surface and the lane (e.g., white line) is small. By contrast, in the polarization-light-based image of FIG. 21B, the contrast between the road surface and the lane is effectively great. Therefore, even if the lane is difficult to recognize in the monochrome luminance image, the lane can be recognized with a high precision by using the polarization-light-based image.

Further, since the white line present at the right side of the captured image is in a shadow area, in the monochrome luminance image of FIG. 21A, the contrast between the white line at the right side and the road surface becomes too small. By contrast, in the polarization-light-based image of FIG. 21B, the contrast between the white line at the right side and the road surface is effectively great. Therefore, even if the lane is difficult to recognize in the monochrome luminance image, the lane can be recognized with a high precision by using the polarization-light-based image.

(Detection process of raindrop on windshield)

A description is given of a process of detecting raindrop. The detection of raindrop (i.e., detection-target object) on windshields conducted for the drive control of the wiper 107 and the dispensing control of washer fluid. In the following example, raindrop is described as substance adhered on the windshield, but the adhered substance is not limited to the raindrop. For example, excrements of birds, water splash from the road surface splashed by other vehicles become the adhered substance.

In the detection process of raindrop on the windshield 105, among the information that can be acquired from the image capturing unit 101, polarized light information of the light, which passes the infrared transmittance-filter area 212 of the front-end filter 210 and the polarized light filter 225 of the rear-end filter 220 used as the raindrop detection filter 220B is used. Specifically, among the light that is received by the raindrop detection image area 214, the perpendicular polarized light component P is used.

Therefore, light entering the windshield 105 from the light source unit 202 is required to include the perpendicular polarized light component P with a greater ratio. The emission of light having the perpendicular polarized light component P with the greater ratio can be devised as follows. For example, if the light source unit 202 employs one or more light emitting diodes (LED), a polarizer that passes through only the perpendicular polarized light component P is disposed between the light source unit 202 and the windshield 105. Further, if the light source unit 202 employs one or more semiconductor laser diodes (LD), since the LD can emit a specific polarization light component alone, the optical axis of the LD is set along a given direction so that the light having only the perpendicular polarized light component P enters the windshield 105.

As described above, the illumination light (e.g., infrared light) emitted from the light source unit 202 enters the reflective deflection prism 230 and then enters the inner face of the windshield 105, and regularly reflects on the outer face of the windshield 105 at a portion where no raindrops adhere on the outer face of the windshield 105. This regular reflection light is received by the image sensor 206 and forms as an image on the adhered substance detection image area 214.

By contrast, the illumination light passes through the outer face of the windshield 105 at a portion where raindrops adhere on the outer face of the windshield 105, and thereby the passing light is not received by the image sensor 206. Therefore, the adhered substance detection image area 214 of the captured image data includes a high luminance image area (high pixel value) corresponding to the portion where no raindrops adhere on the outer face of the windshield 105, and a low luminance image area (low pixel values) corresponding to the portion where raindrops adhere on the outer face of the windshield 105. Based on this difference, it can detect whether raindrops adhere or not, and an amount of adhered raindrops on the outer face of the windshield 105.

FIG. 22 is a schematic view of an image area used for the raindrop detection process. As to the raindrop detection process of one or more example embodiments, information of the adhered substance detection image area 214, which is a part of the captured image data acquired from the image capturing unit 101, is used to determine whether the raindrop amount exceeds a given level. For example, when it is determined that the raindrop amount exceeds the given level, the wiper 107 is driven. Specifically, the adhered substance detection image area 214 is divided into, for example, eight sections, along the horizontal direction of the adhered substance detection image area 214 as illustrated in FIG. 22, and total pixel values IL1 to IL8 are respectively computed for each one of the eight sections. If any one of the total pixel values IL1 to IL8 becomes less than a pre-set threshold ILth, it is determined that the raindrop amount exceeds the given level, and then the wiper 107 is driven. By contrast, if any one of the total pixel values IL1 to IL8 becomes the pre-set threshold ILth or more, the driving of the wiper 107 is stopped. Further, conditions to start and stop the driving of the wiper 107 can be set differently as required. For example, the threshold ILth is not required to be a fixed value but can be changed depending on environmental change around the vehicle 100 disposed with the image capture device 200. Further, the threshold ILth can be the same value or different values for conditions of start and stop of the driving of wiper 107. Each section is composed of a plurality of pixels, and the total pixel value IL1 to IL8 of each section can be computed by adding pixel values of the plurality of pixels. Further, instead of the total pixel value, an average pixel value of each section can be computed by averaging pixel values of the plurality of pixels in each section.

Although the optical filter 205 is disposed as described above to reduce the intrusion of ambient light, an effect of the ambient light cannot be removed completely because the ambient light having the same emission wavelength of the light source unit 202 can pass through the infrared transmittance-filter area 212 corresponding to the adhered substance detection image area 214. For example, during the day time, the infrared wavelength component of the sun light becomes the ambient light, and during the night, the infrared wavelength component included in the headlight of the oncoming vehicle becomes the ambient light. If the ambient light exists, the total pixel value IL1 to IL8 of each section becomes greater for a value corresponding to the amount of the ambient light, which causes an error, and thereby an erroneous detection of raindrop 203 occurs, with which a suitable control cannot be conducted.

To prevent this erroneous detection, the light intensity of illumination light of the light source unit 202 is controlled by synchronizing with an exposure timing of the image sensor 206. Specifically, a high luminance image is captured when the light intensity of illumination light of the light source unit 202 is great (first light intensity), a low luminance image is captured when the light intensity of illumination light of the light source unit 202 is small (second light intensity), a difference image (or compared image) of the high luminance image and the low luminance image is generated for the adhered substance detection image area 214, and the above described raindrop detection process is conducted based on the generated difference image.

Further, the above described raindrop detection process may be conducted by capturing a difference image (or comparing image) of a light-ON image and a light-OFF image, wherein the light-ON image is an image when the light source unit 202 emits the light, and the light-OFF image is an image when the light source unit 202 sets the light OFF. In the above described configuring, the dark correction (BLC) that sets the zero level based on consideration of dark current flowing in each of the light receiving elements of the image sensor 206 is conducted. Therefore, if an output level of ambient light is smaller than the zero level set for the image sensor 206, a signal of the ambient light (hereinafter, weak ambient light) is not output from the image sensor 206 when the light-OFF image is captured. Therefore, even if a difference of the light-ON image and the light-OFF image is computed, a difference image that has removed the effect of the ambient light cannot be obtained, and thereby the erroneous detection of the raindrop 203 caused by the ambient light cannot be suppressed.

In view of this issue, instead of the light-OFF image, the low luminance image is used for the one or more example embodiments. When capturing the low luminance image, the light intensity of illumination light of the light source unit 202 is set to a value so that an output level of the image sensor 206 exceeds the zero level when the illumination light of the light source unit 202 is reflected on the outer face of the windshield 105 and received by the image sensor 206. Therefore, an output level of the image sensor 206, which receives the ambient light, exceeds the zero level not only the high luminance image but also the low luminance image. Therefore, even if the ambient light is weak, an effect of the ambient light can be included in both of the high luminance image and the low luminance image, and by computing a difference of the high luminance image and the low luminance image, a difference image having removed the effect of the ambient light effectively can be obtained.

The light intensity adjustment such as increasing or decreasing the light intensity of illumination light of the light source unit 202 can be conducted by using the light quantity adjuster 102B of the image analyzer 102, which is used as a light intensity adjustment unit. Methods of the adjusting light intensity include, for example, a method of changing power of light source such as LED disposed for the light source unit 202, a method of changing the light emission time of a light source with respect to the exposure time, and a method of changing the number of LEDs used for lighting, disposed in the light source unit 202.

Further, a difference of light intensity of illumination light between the high light-intensity image and the low light-intensity image is preferably set greater as much as possible because a high contrast can be obtained easily for the difference image, and the raindrop detection can be conducted with enhanced precision as the difference of light intensity becomes ) greater. In this description, the light intensity of illumination light when capturing the low light-intensity image is set one-tenth (1/10) of the light intensity of illumination light when capturing the high light-intensity image, but can be set to other values as required.

As to the ambient light, the sun light changes little even if some time elapses. By contrast, the light emitted from the headlight of the oncoming vehicle coming to the vehicle 100 may change greatly even if very short time elapses, in which if a time interval of two frames used for obtaining a difference image becomes too long, the intensity of the ambient light changes greatly in this time interval, and the ambient light may not be cancelled effectively when a difference image is generated. To prevent this phenomenon, two frames used for obtaining the difference image are preferably captured as consecutive frames.

When a standard frame is captured to obtain image information of the vehicle detection image area 213, the automatic exposure control (AEC) based on a luminance value of the vehicle detection image area 213 is conducted while the light source unit 202 is turned OFF. In an interval of standard frames, two frames used for the raindrop detection can be consecutively inserted in the interval of the standard frames. When capturing the two frames used for the raindrop detection, the exposure control is conducted by an exposure control suitable for the raindrop detection instead of the exposure control by the automatic exposure control used for capturing the standard frame. In this description, the standard frame means an image capture frame used for the vehicle detection, which means the standard frame is not a frame dedicated for the raindrop detection.

When conducting the vehicle control and the lighting control, the automatic exposure control (AEC) matched to a luminance value at the center of a captured image is conducted based on image information of the vehicle detection image area 213. However, as to the two frames used for detecting raindrops, an exposure control suitable to the raindrop detection is preferably conducted because if the automatic exposure control is conducted when capturing the two frames used for detecting raindrop, the exposure time may vary for a frame when the light source unit 202 emits light of high light intensity and a frame when the light source unit 202 light of low light intensity. If the exposure time between the two frames are different, the received amount of ambient light included in each of the two frames becomes different, with which the ambient light may not be cancelled effectively for a difference image. Therefore, the exposure control of the two frames for detecting raindrops is conducted by setting the same exposure time.

As to the one or more example embodiments, the raindrop detection process can be conducted using an image capture frame used for the vehicle detection, which is same as the standard frame, instead of a frame dedicated only for the raindrop detection. A description is given of two example operations for the raindrop detection using the image capture frame of the standard frame.

(Image capturing operation of example 1)

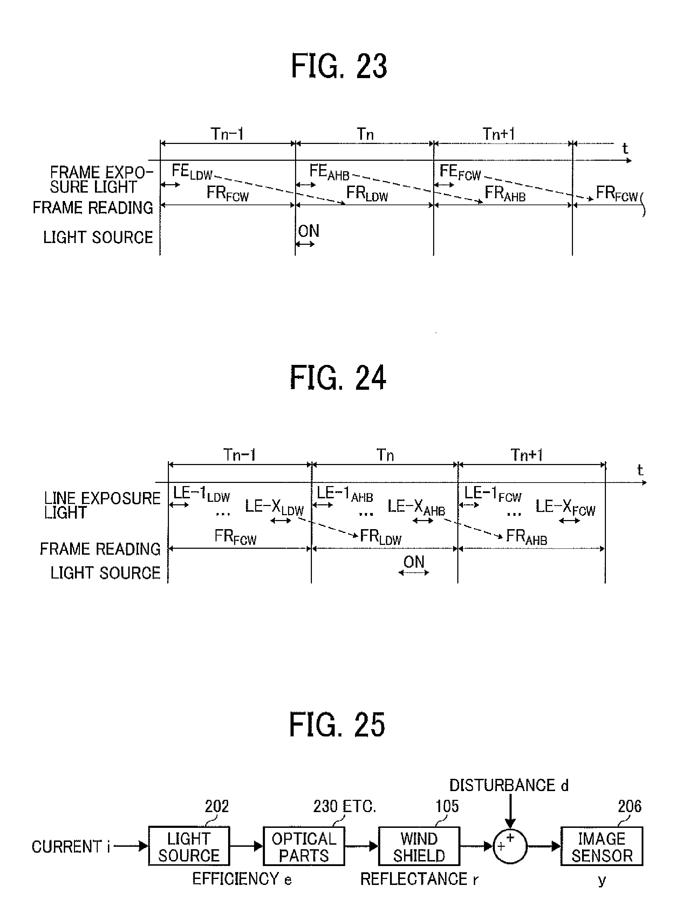

FIG. 23 is a timing chart illustrating an example of image capturing operation when a raindrop detection process is conducted using image capture frames, same as the standard frames, without using frames dedicated for the raindrop detection (hereinafter, image capturing operation of example 1). This timing chart schematically illustrates an image capturing operation but does not illustrate exact control timing, and the length of arrows does not correspond to exact time length.

As to the image capturing operation of example 1, the image capture device 200 employs a CCD image sensor for the image sensor 206 and a global shutter that exposes all image capturing elements of the image sensor 206 at the same time to generate an image capture frame. Therefore, as to the image capturing operation of example 1, as illustrated in FIG. 23, signals of each of image capturing elements of the image sensor 206 exposed at the same time at one frame frequency Tn-1 (first frame) are read out during a next frame frequency Tn (second frame).

As to the image capturing operation of example 1, the image capturing operation sequentially capturing the following three types of image capture frames is repeated.

The first frame of image capture frame is used for the lane control, which is referred to lane departure warning (LDW). When the first frame is captured, exposure time $FE_{LDW}$ (i.e., exposure condition) is automatically controlled, for example, within a range from 20 $\mu$s to 33 ms, in which exposure time $FE_{LDW}$ close to 20 $\mu$s is set for the day time, and exposure time $FE_{LDW}$ close to 33 ms is set for the night. The second frame of image capture frame is used for the lighting control of headlight, which is referred to auto high beam (AHB). When the second frame is captured, exposure time $FE_{AHB}$ (i.e., exposure condition) is set with a fixed value such as 40 $\mu$s for the day time and night. The third frame of image capture frame is used for the collision avoiding control, which is referred to front collision warning (FCW). When the third frame is captured, exposure time $FE_{FCW}$ (i.e., exposure condition) is automatically controlled, for example, within a range from 20 $\mu$s to 33 ms, in which exposure time $FE_{FCW}$ close to 20 $\mu$s is set for the day time, and exposure time FE$_{FCW}$ close to 33 ms is set for the night.

As described above, the raindrop detection process for detecting raindrop (i.e., adhered substance) adhered on the windshield 105 is conducted, and then the wiper drive control is conducted based on the raindrop detection result. The exposure condition suitable for captured image data used for the raindrop detection process is preferably a shorter exposure time that can decrease the exposure amount so that the effect of flare or ghost of a lens and the effect of ambient light, which is not the illumination light from the light source unit 202, can be reduced. As to the image capturing operation of example 1, among the three types of image capture frames, an image capture frame captured with the exposure condition close to the exposure condition suitable for the raindrop detection process is used for the raindrop detection process. Specifically, among the three types of image capture frame, the image capture frame for the lighting control of headlight (AHB) is used for the raindrop detection process.

As to the one or more example embodiments, the optical filter 205 includes the infrared transmittance-filter area 212 used as a wavelength limiter that selectively passes through infrared light (infrared wavelength range) emitted from the light source unit 202. The infrared transmittance-filter area 212 is disposed for the raindrop detection filter 220B, corresponded to the adhered substance detection image area 214 for capturing image data to be used for the raindrop detection process.

Since the optical filter 205 causes light loss of passing light due to the configuration of the optical filter 205, the received amount of illumination light, emitted from the light source unit 202, received by the image sensor 206 decreases compared to a configuration not disposing the optical filter 205, Therefore, when the optical filter 205 is disposed, the exposure time of captured image data suitable for the raindrop detection process is extended compared to the configuration not disposing the optical filter 205. For example, the exposure time of captured image data suitable for the raindrop detection process is 4 $\mu$s without the optical filter 205, and 40 $\mu$s with the optical filter 205. Therefore, without decreasing the detection precision of the raindrop detection process, the image capture frame for the lighting control of headlight (AHB) set with the exposure time of 40 $\mu$s can be used for the raindrop detection process.

Further, the image capture frame for the lighting control of headlight (AHB) used for the raindrop detection process is captured using a fixed exposure time. Therefore, a frame of the high light intensity image and a frame of low light intensity image are set with the same exposure time, with which a suitable difference image can be obtained. Further, the type of image capture frame used for the raindrop detection process is not limited to the image capture frame having the fixed exposure time, and is not limited to the image capture frame for the lighting control of headlight (AHB).

The high light intensity image and low light intensity image can be captured as follows. For example, when the above described three types of image capture frame are repeated with a given cycle, the high light intensity image and low light intensity image can be captured repeatedly. Specifically, when exposing the image capture frame for the lighting control of headlight (AHB) in one cycle, the light source unit 202 is set to the high intensity condition to capture the high light intensity image, and when exposing the image capture frame for the lighting control of headlight (AHB) in the next cycle, the light source unit 202 is set to the low intensity condition to capture the low light intensity image.

Further, an image capture frame for the lighting control of headlight (AHB) captured by setting the light source unit 202 at the high intensity condition and an image capture frame for the lighting control of headlight (AHB) captured by setting the light source unit 202 at the low intensity condition can be used. For example, the first frame is used as the image capture frame for the lane control (LDW), the second frame is used as the image capture frame for the lighting control of headlight (AHB) captured by setting the light source unit 202 at the high intensity condition, the third frame is used as the image capture frame for the front collision warning (FCW), and the fourth frame is used as the image capture frame for the lighting control of headlight (AHB) captured by setting the light source unit 202 at the low intensity condition.

Further, as illustrated in FIG. 23, the light source unit 202 is set OFF in a period other than the exposure period of the image capture frame used for the raindrop detection process. With this configuration, compared to a configuration setting the light source unit 202 at ON constantly, power consumption can be reduced. Further, a part of illumination light emitted from the light source unit 202 may reach the vehicle detection image area 213 and becomes ambient light on the vehicle detection image area 213. Therefore, by setting the light source unit 202 at OFF for the image capture frame for the lane control (LDW) and the image capture frame for the front collision warning (FCW), which are not used for the raindrop detection process, the ambient light caused by the illumination light of the light source unit 202 can be reduced or suppressed, with which the control can be conducted with enhanced precision.

(Image capturing operation of example 2)

FIG. 24 is a timing chart illustrating another example of image capturing operation when a raindrop detection process is conducted image capture frames, same as the standard frames, without using a frame for raindrop detection (hereinafter, image capturing operation of example 2). This timing chart schematically illustrates an image capturing operation but does not illustrate exact control timing, and the length of arrows does not correspond to exact time length.

As to the image capturing operation of example 2, the image capture device 200 employs a CMOS image sensor for the image sensor 206 and a rolling shutter that sequentially exposes each of the image capturing elements of the image sensor 206 to generate an image capture frame. As to the image capturing operation of example 2, image capturing elements disposed on the image sensor 206 are exposed line by line, and signals of lines "1 to X" of the image capturing elements are sequentially read.

Similar to the above described image capturing operation of example 1, as to the image capturing operation of example 2, the image capturing operation sequentially capturing the three types of image capture frame is repeated. Further, as to the image capturing operation of example 2, the raindrop detection process can be conducted using the image capture frame for the lighting control of headlight (AHB) without inserting frames dedicated for the raindrop detection.

As to the above described image capturing operation of example 1, the light source unit 202 is set ON when exposing the image capture frame for the lighting control of headlight (AHB) used for the raindrop detection process. Therefore, a part of illumination light emitted from the light source unit 202 may reach the vehicle detection image area 213 when the image capture frame for the lighting control of headlight (AHB) is captured, and becomes ambient light on the vehicle detection image area 213. In this case, the ambient light may degrade the detection precision of tail lamp and/or headlight for the lighting control of headlight (AHB), with which the precision of the lighting control of headlight (AHB) may degrade.

Therefore, as to the image capturing operation of example 2, the light source control is conducted as illustrated in FIG. 24. When exposing the image capture frame for the lighting control of headlight (AHB), the light source unit 202 is set OFF for lines corresponding to the vehicle detection image area 213, and the light source unit 202 is set ON (e.g., high intensity condition or low intensity condition) when exposing lines corresponding to the adhered substance detection image area 214.

With this configuration, an effect of illumination light of the light source unit 202 to the vehicle detection image area 213 as ambient light can be reduced or suppressed while the raindrop detection using the illumination light of the light source unit 202 can be conducted for the adhered substance detection image area 214 when the image capture frame for the lighting control of headlight (AHB) is captured. Further, compared to a configuration setting the light source unit 202 at ON constantly when exposing the image capture frame for the lighting control of headlight (AHB), power consumption can be reduced.

Further, as to the rolling shutter of the image capturing operation of example 2, the high light intensity image and the low light intensity image can be captured as follows. For example, when exposing lines corresponding to the adhered substance detection image area 214 for the image capture frame for the lighting control of headlight (AHB), high intensity condition/low intensity condition of the light source unit 202 can be repeated for the units of one or more lines. With this light source control, a difference of the high light intensity image and the low light intensity image can be obtained by only using the adhered substance detection image area 214 in one image capture frame. Since this difference information does not have time deviation, the raindrop detection can be conducted with enhanced precision.

A description is given of a process of correcting a detection error of raindrop caused by temperature change according to one or more example embodiments. In the following description, for the sake of simplicity of description, a light-OFF image is used instead of low light intensity image, and based on a difference image of light-ON image (high light intensity image) and light-OFF image, the raindrop detection is conducted. Although the erroneous detection of raindrop amount caused by temperature change is described as one example, the erroneous detection of raindrop amount may occur due to a change of other factors such as humidity.

FIG. 25 is a detection model for a raindrop detection processing. In the raindrop detection process according to one or more example embodiments, as illustrated in FIG. 22, the adhered substance detection image area 214 is divided into, for example, eight sections along the horizontal direction of the adhered substance detection image area 214, and the total pixel values IL1 to IL8 are respectively computed for each of the sections. Hereinafter, each section is referred to as section x (x = 1 to 8), and the total pixel value of each section "x" at one time "t" is referred to as y(x,t). The total pixel value y(x,t) of the section x can be referred to pixel value information. Instead of the total pixel value of section "x," the average pixel value of section "x" can be used as the pixel value information. In the raindrop detection processing, which detects the raindrop amount, the total pixel value y(x,t) of each section x is obtained when the illumination light having a given light intensity corresponding to an input current "i(t)" is emitted from the light source unit 202, and the reflection light reflected from the outer face of the windshield 105 having reflectance r(x,t), changeable depending on raindrop adhesion, is received by the image sensor 206.

During the time that the illumination light is being emitted from the light source unit 202 and then received by the image sensor 206, the illumination light travels along optical parts such as the reflective deflection prism 230, the windshield 105, and others. In this time period, transmission efficiency "e" may vary for each of the sections "x" due to unevenness of each of the optical parts. Since optical properties of each of the optical parts change when temperature changes, the transmission efficiency "e" can be expressed as e(x,t). Further, the image sensor 206 receives ambient light d(x,t), which is not the illumination light.

Based on the above conditions, if sensor property of the image sensor 206 is set as "f," the following formula (1) can be established. The term of "e(x,t)xi(t)" in the formula (1) is a light component received by the image sensor 206 when the illumination light totally reflects on the windshield 105 not adhered with raindrops.

$$y(x,t) = f [e(x,t) \times i(t) \times r(x,t) + d(x,t) + e(x,t) \times i(t)] \quad (1)$$

If the sensor property "f" is assumed as linear, the following formula (2) can be obtained from the formula (1).

$$y(x,t) = e(x,t) \times i(t) \times r(x,t) + d(x,t) + e(x,t) \times i(t) \quad (2)$$

When yOFF(x,t) represents the light-OFF image, and yON(x,t) represents the light-ON image, $y_{OFF}(x,t) = d(x,t)$ is obtained because of $i(t) = 0$ when a captured image is the light-OFF image. Since yON(x,t) for the light-ON image is expressed exactly by the formula (2), a difference image of the light-ON image and the light-OFF image $[y_{ON}(x,t) - y_{OFF}(x,t)]$ can be expressed by the following formula (3).

$$y_{ON}(x,t) - y_{OFF}(x,t) = e(x,t) \times i(t) \times r(x,t) + e(x,t) \times i(t) \quad (3)$$

As to the raindrop detection processing, reflectance r(x,t) correlated to the raindrop amount is computed. By solving the formula (3) for the reflectance r(x,t), the following formula (4) can be obtained.

$$r(x,t) = [y_{ON}(x,t) - y_{OFF}(x,t)] / [e(x,t) \times i(t)] - 1 \quad (4)$$

If temperature changes from a given standard temperature, a light emission output from a light source of the light source unit 202 may change, distortion (warping) amount of the sensor board 207 mounting the light source unit 202 may change, and distortion amount of the reflective deflection prism 230 and the windshield 105 may change, with which the total pixel value y(x,t) of each section "x" changes with or without a change of raindrop amount. An effect caused by temperature change appears as fluctuation of the transmission efficiency e(x,t) of the detection model.

A factor such as external disturbance factor that causes fluctuation of the transmission efficiency e(x,t) is not limited to temperature change, but may be other fluctuation factors changeable along the timeline such as humidity. It is known that the temperature change is the external disturbance factor having the greatest effect to the fluctuation of the transmission efficiency e(x,t). In the following description, it is assumed that the temperature change is the external disturbance factor having the greatest effect to the fluctuation of the transmission efficiency e(x,t), and a process of correcting a detection error of raindrop caused by temperature change is described based on this assumption.

As to the process of correcting the detection error of raindrop amount, the total pixel value y(x,t) of each of eight sections "x" is used, in which y(x,t) at each of eight observation points (i.e., each one of the sections x) can be obtained simultaneously. The amount of error caused by temperature change (i.e., error with respect to given standard temperature) and the timewise change of the error are different for each one of the sections "x." Based on the error at each one of the sections "x", an amount of pixel value component that is changed by temperature change at each section x included in the detected total pixel value y(x,t) of each section x can be identified. The amount of pixel value component changed by temperature change corresponds to an error caused by temperature change at each section x, in which this pixel value component corresponding to the error may be referred to "temperature-based error component" hereinafter.

Specifically, when temperature changes as the time "t" elapses, the temperature-based error component included in the total pixel value y(x,t) of each section "x" changes depending on a change of property of each section "x" (temperature-dependent property of each section "x") caused by temperature changes. When the temperature change occurs, distortion of the sensor board 207 mounting the light source unit 202 causes deviation of illumination light and distortion of optical parts such as the reflective deflection prism 230. In this condition, light paths of light to be received by each of the sections "x" become different for each of the sections "x". Therefore, a change of received light amount at each section "x" caused by the deviation of illumination light and distortion of optical parts are different at each of the sections "x". Therefore, the temperature-dependent property of each section "x" such as the total pixel value y(x,t) of each section "x" may be different for each of the sections "x". By using this feature that the property of each section "x" changes depending on temperature change occurring for each of the sections "x", the temperature-based error component (i.e., error for each section "x" caused by temperature change) included in the detected total pixel value y(x,t) of each section x can be identified.

Specifically, it is required to acquire the temperature-dependent property of each section "x" specifically settable to the image capturing unit 101. The acquiring of the temperature-dependent property can be conducted at least at an initial stage.

When the temperature-dependent property changes due to the use over time, the temperature-dependent property can be acquired and updated at suitable timing. The temperature-dependent property can be acquired by know methods. For example, as described below, the temperature-dependent property can be acquired by using a principal component analysis. A description is given of a method of acquiring temperature-dependent property at each section "x" using the principal component analysis.

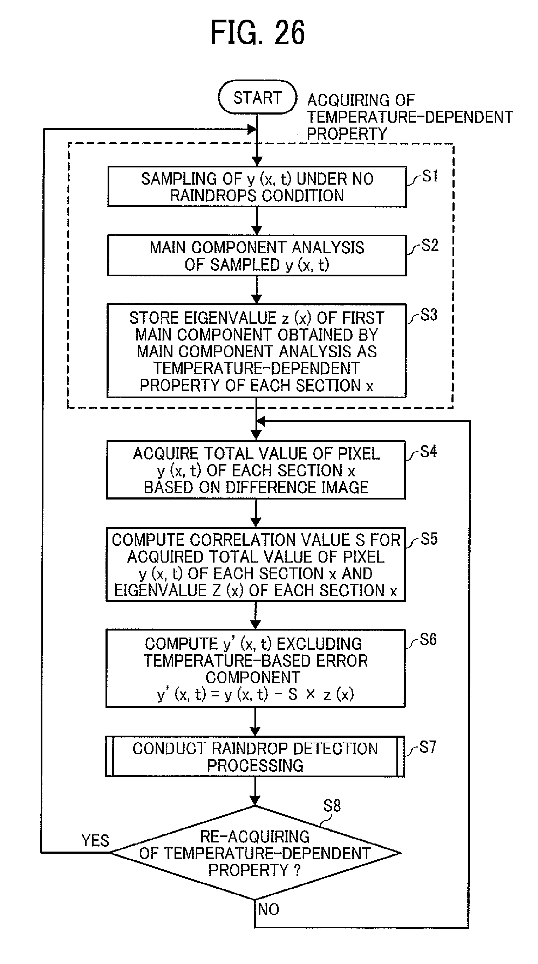

FIG. 26 is a flowchart showing the steps of a process of correcting a detection error of raindrop amount caused by temperature change. When acquiring the temperature-dependent property at each section "x" by applying the principal component analysis, at first, the total pixel value $y(x,t)$ of each section "x" is sampled with enough numbers (S1) under a condition that no raindrops adhere on the windshield 105 and temperature changes timewisely in a greater range. Since temperature changes as a function of time that elapses or changes, $y(x,t)$ can be expressed as $y(x,T)$, wherein T represents temperature. In this case, the total pixel value $y(x,t)$ of each section "x" can be computed based on a difference image of the light-ON image and the light-OFF image, in which the total pixel value $y(x,t)$ of each section "x" can be computed as $[y_{ON}(x,t) - y_{OFF}(x,t)]$.

The principal component analysis is conducted using sampled data of $y(x,t)$ (S2), and a principal component weight $z(x)$ for a first principal component is extracted and stored (S3). Specifically, variance-covariance matrix $A = cov(y)$ of $y(x,t)$ is computed, and a characteristic equation of the following formula (5) is solved, with which eigenvalue $\lambda$ and eigenvector Z satisfying the relationship of the following formula (6) are obtained. In this case, since the eigenvector Z, corresponding to the greatest eigenvalue $\lambda$, corresponds to the first principal component, the eigenvector Z is acquired as the principal component weight $z(x)$ of the first principal component, hereinafter, which is referred to first principal component weight. When the number of the sections "x" is, for example, eight, the variance-covariance matrix A becomes a matrix of $8 \times 8$.

$$\det(\lambda E\text{-}A) = 0 \quad (5)$$

$$A \cdot Z = \lambda \cdot Z \quad (6)$$

The first principal component weight used for the principal component analysis corresponds to fluctuation of data caused by the most influential factor. Since temperature such as temperature change is the most influential factor that affects data fluctuation, the first principal component weight used for the principal component analysis can be assumed as fluctuation of data caused by temperature change.

The first principal component weight $z(x)$ obtained by the principal component analysis is information of the first principal component weight (eigenvalue) z1 to z8 for each of the eight sections "x." Each of the first principal component weight z1 to z8 is a correlation coefficient of temperature and the total pixel value $y(x,t)$ of each section "x", and also indicates temperature-dependent property for each of the sections "x". Since the first principal component weight $z(x)$ is a value specifically settable to the image capturing unit 101, the first principal component weight $z(x)$ is preferably stored in the internal memory 209 of the image capturing unit 101.

After storing the first principal component weight $z(x)$, which is the temperature-dependent property for each section "x," as information of correlation value (i.e., correlation coefficient) in the internal memory 209, the total pixel value of each section x is obtained using a formula of $(x,t) = y_{ON}(x,t) - y_{OFF}(x,t)$ described in the above raindrop detection processing based on a difference image of the light-ON image and light-OFF image (S4).

Then, a correlation operation is computed for the stored first principal component weight $z(x)$ and the obtained total pixel value $y(x,t)$ of each section "x" to obtain an external disturbance factor value "S" (S5). Specifically, the external disturbance factor value "S" can be obtained by computing a correlation equation of the following equation (7), in which the CPU 1021 of the image analyzer 102 can function as a correlation value information generation and storing unit.

$$S = \sum_{x=1}^{8} \left[ y(x,t) \times z(x) \right] \quad (7)$$

The external disturbance factor value "S" obtainable by the above described processing may vary depending on a level of temperature when the total pixel value $y(x,t)$ of each section "x" is obtained at each time the raindrop detection processing is conducted. Therefore, by multiplying the external disturbance factor value "S" and the first principal component weight z(x), which is a correlation coefficient of temperature and the total pixel value y(x,t) of each section "x," the temperature-based error component (i.e., fluctuation component caused by external disturbance) S×z(x), included in the total pixel value y(x,t) of each section "x" used for computing the difference image can be obtained at each time the raindrop detection processing is conducted. Therefore, a total pixel value y'(x,t) of each section "x" having removed the temperature-based error component can be computed by using the following formula (8) (S6). In this specification, the total pixel value y (x,t) of each section "x" before removing the temperature-based error component may be referred to as the first pixel value information, and the total pixel value y'(x,t) of each section "x" after removed the temperature-based error component may be referred to as the second pixel value information.

$$y'(x,t) = y(x,t) - S \times z(x) \quad (8)$$

After obtaining the total pixel value y'(x,t) of each section "x" having removed the temperature-based error component, the above described raindrop detection processing is conducted using the total pixel value y'(x,t) (S7), which means that y'(x,t) is used as the total pixel values IL1 to IL8 for eight sections on the adhered substance detection image area 214. If any one of the total pixel value y'(x,t) of section "x" becomes smaller than a given threshold ILth, it is determined that the raindrop amount exceeds a given level, and then the wiper 107 is driven. By contrast, if any one of the total pixel value y'(x,t) of section "x" becomes the given threshold ILth or more, the driving of the wiper 107 is stopped.

Then, when a given re-acquiring timing of temperature-dependent property comes (S8: Yes), the above described steps S1 to S3 are conducted, in which the first principal component weight z(x), obtained from a result of the principal component analysis of the sampled data y(x,t), is extracted and stored. Then, the raindrop detection processing from S4 to S7 is repeatedly conducted by using a newly obtained first principal component weight z(x).

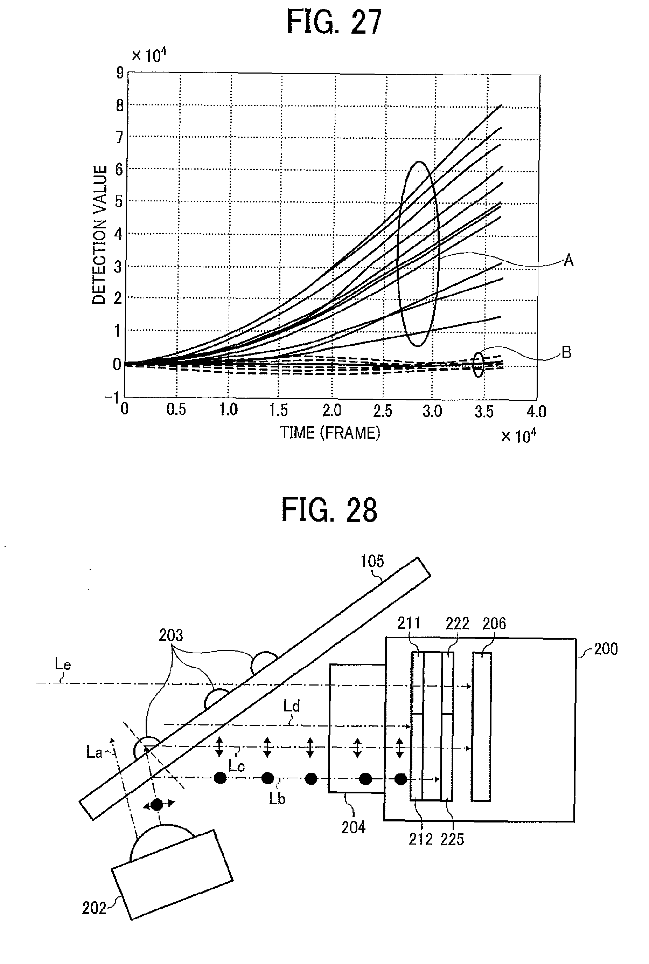

FIG. 27 is a graph showing an experiment result of the total luminance value of each section "x" when temperature was increased from 0 to 60 Celsius degrees in an imaging environment illuminated by illumination light emitting light with a constant level. The vertical axis represents the detection value, which is normalized to set the receiving amount of reference illumination light becomes zero, and the vertical axis corresponds to raindrop amount to determine positive or negative. The horizontal axis represents time, which is equivalent to temperature in this experiment. This experiment was conducted by setting sixteen sections.

As to the graph of FIG. 27, a data group indicated by reference A indicates the raindrop detection amount y(x,t) for each section "x" not conducted with the above described correction process for detection error of raindrop. As to the data group A, the raindrop detection amount y (x,t) for each section "x" increases as the time elapses, which means temperature change affects the raindrop detection.

By contrast, a data group indicated by reference B indicates the raindrop detection amount y(x,t) for each section "x" conducted with the above described correction process for detection error of raindrop. As to the data group B, the raindrop detection amount y (x,t) for each section "x" conducted with the correction process was maintained at the almost same level even the time elapses, which means temperature-based error component is effectively removed.

(Variant example)

A description is given of a variant example according to one or more example embodiments. In the above described example embodiment, the reflective deflection prism 230 is used, the illumination light passes through the outer face of the windshield 105 at a raindrop adhering portion while the illumination light reflects on the outer face of the windshield 105 at a raindrop non-adhering portion and is then received by the image sensor 206.

As to the variant example, as illustrated in FIG. 28, the illumination light passes through the outer face of the windshield 105 at a raindrop non-adhering portion while the illumination light, passing through the outer face of the windshield 105, reflects at a raindrop adhering portion and is then received by the image sensor 206.

FIG. 28 illustrates a schematic configuration of the image capture device 200, the light source unit 202, and light beams that may be used for the raindrop detection. FIG. 28 illustrates an example configuration that illumination light emitted from the light source unit 202 directly enters the inner face of the windshield 105, but the illumination light can be guided to the windshield 105 via a light path changing member, in which the light source unit 202 can be mounted on the sensor board 207 same as the above described example embodiment.

(Light beam La)

Light beam La in FIG. 28 is light, emitted from the light source unit 202 and then passes through the windshield 105. When the raindrop 203 does not adhere on the outer face of the windshield 105, light emitted from the light source unit 202 toward the windshield 105 passes through the windshield 105, and then goes out of the vehicle 100 as the light beam La.

(Light beam Lb)

Light beam Lb in FIG. 28 is light, emitted from the light source 202 and reflected regularly on the inner face of the windshield 105 and then entering the image capture device 200. A part of the light emitted from the light source 202 toward the windshield 105 regularly reflects on the inner face of the windshield 105. The regular reflection light (light beam Lb in FIG. 18) has a polarization light component, wherein the polarization light component of light beam Lb is mostly S-polarized light component (or horizontal polarized light component S), which oscillates in a direction perpendicular to a light incidence plane (or in a direction perpendicular to a sheet of FIG. 28). The light beam Lb (i.e., regular reflection light) reflected regularly on the inner face of the windshield 105 does not change its property whether the raindrop 203 adheres or not on the outer face of the windshield 105, and thereby the light beam Lb is not necessary for the raindrop detection. Further, the light beam Lb becomes ambient light that degrades the detection precision of the raindrop detection. In the variant example, the light beam Lb (horizontal polarized light component S) is cut by the polarized light filter 225 disposed for the raindrop detection filter 220B, with which deterioration of the precision of raindrop detection due to the light beam Lb can be reduced, suppressed, or prevented.

(Light beam Lc)

Light beam Lc in FIG. 28 is light, emitted from the light source 202 and passing through the inner face of the windshield 105, reflected at a raindrop adhered on the outer face of the windshield 105, and then entering the image capture device 200. A part of the light emitted from the light source 202 toward the windshield 105 passes through the inner face of the windshield 105 as passing light. The passing light includes the perpendicular polarized light component P greater than the horizontal polarized light component S. If the raindrop 203 adheres on the outer face of the windshield 105, the passing light, which has passed through the inner face of the windshield 105, does not go out of the windshield 105, different from the light beam La, but the passing light reflects inside the raindrop for multiple times, and passes through the windshield 105 again toward the image capture device 200, and enters the image capture device 200. In the optical filter 205 of the image capture device 200, the infrared transmittance-filter area 212 disposed for the front-end filter 210 is configured to pass through light having a wavelength of emission light of the light source 202, which is infrared light. Therefore, the light beam Lc passes through the infrared transmittance-filter area 212. Further, the polarized light filter 225 disposed for the raindrop detection filter 220B of the rear-end filter 220 employs the wire grid structure by forming the long side direction of metal wire into a shape to pass through the perpendicular polarized light component P, with which the light beam Lc can also pass through the polarized light filter 225. Therefore, the light beam Lc can reach the image sensors 206, and the raindrop detection can be conducted based on an amount of the light beam Lc received by the image sensor 206.

(Light beam Ld)

Light beam Ld in FIG. 28 is light, coming from the outside of the windshield 105 and passing through the windshield 105, and then entering the raindrop detection filter 220B of the image capture device 200. The light beam Ld may become ambient light when conducting the raindrop detection, but most of light component included in the light beam Ld can be cut by the infrared transmittance-filter area 212 disposed for the front-end filter 210 of the optical filter 205. Therefore, deterioration of the precision of raindrop detection due to the light beam Ld can be reduced, suppressed, in particular prevented.

(Light beam Le)

Light beam Le in FIG. 28 is light, coming from the outside of the windshield 105 and passing through the windshield 105, and then entering the vehicle detection filter 220A of the image capture device 200. The infrared cut-filter area 211, disposed for the front-end filter 210 of the optical filter 205, cuts infrared light included in the light beam Le, and thereby only visible light of the light beam Le can be captured and received by the image sensor 206 as captured image data. The captured image data can be used to detect the headlight of the oncoming vehicle, the tail lamp of the front-running vehicle, and the lane (e.g., white line).

As to the variant example, ambient light having a wavelength equal to the emission wavelength of the light source unit 202 can pass through the infrared transmittance-filter area 212 corresponding to the adhered substance detection image area 214. Then, each of the total pixel values IL1 to IL8 of each of the sections of the adhered substance detection image area 214 becomes greater for a value corresponding to the amount of the ambient light, which causes an error. As to the variant example, since a pixel value corresponding to the raindrop adhesion portion are greater, and a pixel value corresponding to the raindrop not-adhesion portion are smaller, a portion not adhered with raindrops may be determined as the raindrop adhesion portion due to the ambient light effect, which becomes the erroneous detection.

This erroneous detection can be corrected by removing the effect of ambient light by obtaining a difference image same as the above described example embodiment. However, if the ambient light is a weak light, which is smaller than the zero level set by the dark correction (BLC), a difference image computed from the light-ON image and the light-OFF image does not include the effect of weak ambient light. Therefore, the effect of ambient light cannot be removed by obtaining the difference image, and thereby the erroneous detection of raindrop due to the ambient light cannot be corrected.

Therefore, as also for the variant example, by using the low light intensity image instead of the light-OFF image, the effect of weak ambient light can be included in both of the high light intensity image and the low light intensity image. Then, by obtaining a difference of the high light intensity image and the low light intensity image, a difference image that has removed the effect of the ambient light can be obtained.

The above described example embodiments of the present invention can includes following configurations.

(Embodiment A)

An image processing apparatus (e.g., image analyzer 102) conducts an image processing to detect an object, existing in a lighting area irradiated by a lighting unit (e.g., light source unit 202), based on an image of the adhered substance detection image area 214 captured by the image capturing unit 101. The image processing apparatus includes a process execution unit (e.g., CPU 1021 of the image analyzer 102) to conduct the image processing for detecting an object or detection target object (e.g., raindrop 203) existing in the lighting area. The image processing apparatus includes a memory (e.g., internal memory 209) in the image capturing unit 101 that stores pixel value information such as first pixel value information "y(x,t)" for each one of a plurality of sections "x" obtainable by dividing the captured image, and correlation value information z(x) (e.g., first principal component weight) for the first pixel value information "y(x,t)" and an external disturbance factor (e.g., temperature) for computing an external disturbance factor value S indicating a level of the external disturbance factor for each one of the plurality of sections "x."

The image analyzer 102 computes the external disturbance factor value "S" by multiplying the first pixel value information such as the total pixel value y(x,t) and the correlation value information z(x) for each one of the plurality of sections "x," The image analyzer 102 computes a fluctuation component "S x z(x)" caused by the external disturbance factor (e.g., temperature-based error component) by multiplying the computed external disturbance factor value "S" and the correlation value information z(x). The image analyzer 102 computes second pixel value information such as the total pixel value y'(x,t) by removing the fluctuation component "S x z(x)" from the first pixel value information such as the total pixel value y(x,t). The image analyzer 102, including the CPU 1021, conducts the image processing using the second pixel value information having removed the fluctuation component.

The first pixel value information, changeable due to fluctuation of an external disturbance factor such as temperature, differs for each one of the section. Therefore, strong correlation can be assumed between the pixel value information at each section and a level of external disturbance factor (i.e., external disturbance factor value S) at each time the first pixel value information is obtained.

In Embodiment A, the correlation value information indicating this correlation relationship can be stored in the internal memory 209. Further, in Embodiment A, after obtaining the pixel value information for each section for conducting an image processing to detect a detection target object, an external disturbance factor value S can be computed by multiplying the pixel value information and the correlation value information for each section. By using this external disturbance factor value S, the fluctuation component "S x z(x)" included in the first pixel value information can be identified at each time the first pixel value information is obtained.

In Embodiment A, the above identified fluctuation component caused by the external disturbance factor can be removed from the first pixel value information for each section at each time the detection processing is conducted, and then the image processing is conducted by using the second pixel value information having removed the fluctuation component caused "S x z(x)"by the external disturbance factor. With this configuration, the erroneous detection of a detection target object caused by one or more external disturbance factors can be suppressed, in particular prevented.

(Embodiment B)

As to the Embodiment A, the process execution unit uses the second pixel value information for the image processing by the process execution unit. The second pixel value information can be obtained by computing the external disturbance factor value "S" using the first pixel value information y(x,t) and the correlation value information z(x) for each one of the plurality of sections "x," by computing the fluctuation component "S x z(x)," caused by the external disturbance and included in first pixel value information, using the external disturbance factor value "S" and the correlation value information z(x) for each one of the plurality of sections, and by removing the fluctuation component "S x z(x)" from the first pixel value information for each one of the plurality of sections "x." With this configuration, at each time of obtaining the first pixel value information for each section, a fluctuation component caused by one or more external disturbance factors included in the obtained first pixel value information can be identified with enhanced precision.

(Embodiment C)

As to the Embodiments A or B, the correlation value information $z(x)$ is a principal component weight obtainable by conducting a principal component analysis to the first pixel value information $y(x,t)$ obtained for each one of the plurality of sections "x" exceeding a defined value under a condition that the external disturbance factor value "S" exceeds a defined fluctuation range. External disturbance factors including unknown factors cause fluctuation of pixel value information with complexed manner. To obtain the correlation value information related to an external disturbance factor, pixel value information changeable due to the external disturbance factor is required to be extracted. The extraction method employs, for example, the principal component analysis. Specifically, under a condition that external disturbance factor value exceeds the defined fluctuation range, pixel value information exceeding the defined value due to the effect of various external disturbance factors is obtained, and the principal component analysis is conducted to the obtained pixel value information to extract pixel value information caused by a specific external disturbance factor from the obtained pixel value information.

(Embodiment D)

As to the Embodiment C, the correlation value information includes a first principal component weight acquired by the principal component analysis. With this configuration, correlation value information related to an external disturbance factor having the greatest influence or effect for fluctuating the first pixel value information can be obtained.

(Embodiment F)

As to any one of the Embodiments A to E, the pixel value information is a total of pixel values at each one of the plurality of sections or an average of pixel values at each one of the plurality of sections. With this configuration, the erroneous detection of a detection target object caused by external disturbance factors can be suppressed, in particular prevented with a simple processing.

(Embodiment G)

As to any one of the Embodiments A to F, the memory 209 is disposed in the image capturing unit 101. Since the correlation value information stored in the memory 209 is specifically set for each image capturing unit 101, it is preferable to manage the correlation value information with the image capturing unit 101, and the configuration of Embodiment G enables this management effectively.

(Embodiment H)

As to any one of the Embodiments A to G, the image processing apparatus includes a correlation value information generation and storing unit, which may be the image analyzer 102 including the CPU 1021, that generates and stores the correlation value information $z(x)$ in the memory 209 based on the first pixel value information exceeding the defined value, obtained for each one of the plurality of sections x" under a condition that illumination light, emitted from the lighting unit and irradiating the lighting area, is received by the image sensor 206 via a light transmitting member such as the windshield 105 and the external disturbance factor value "S" exceeds the defined fluctuation range. With this configuration, even if correlation value information changes due to the use over time, and the erroneous detection of a detection target object caused by external disturbance factors may occur, the correlation value information can be updated, with which the erroneous detection of a detection target object caused by external disturbance factors can be suppressed, in particular prevented.

(Embodiment I)

As to the Embodiment H, the image processing apparatus includes a detection unit, which may be the image analyzer 102 including the CPU 1021, that detects the external disturbance factor value "S" exceeds the defined fluctuation range. With this configuration, a situation that the external disturbance factor value "S" exceeds the defined fluctuation range can be effectively detected, and thereby suitable correlation value information can be generated.

(Embodiment J)

A vehicle-mounted device control system for a vehicle, wherein the vehicle is an example of movable apparatuses, includes the image processing apparatus of any one of the Embodiments A to I including the image analyzer 102, and the vehicle-mounted device controller such as the wiper controller 106, the headlight controller 103, and the vehicle controller 108.

The image analyzer 102 conducts an image processing to detect a detection target object such as the raindrop 203 existing in a lighting area irradiated by a lighting unit such as the light source unit 202 based on an image of the adhered substance detection image area 214 captured by the image capturing unit 101. The vehicle-mounted device controller that controls given devices mounted on the vehicle 100 includes the wiper controller 106 that controls a wiper, the headlight controller 103 that controls a headlight, and the vehicle controller 108 that controls a steering wheel and a brake. With this configuration, the erroneous detection of a detection target object caused by external disturbance factors can be suppressed, in particular prevented, and thereby the vehicle-mounted devices can be controlled based on a detection result of a detection target object with enhanced precision.

(Embodiment K)

A non-transitory computer-readable carrier medium stores a program that, when executed by a computer having a processing circuitry, causes the computer to execute a method of processing an image to detect an object, existing in a lighting area irradiated by the lighting unit such as the light source unit 202, based on an image captured by an image capturing unit 101. The method includes the steps of storing first pixel value information for each one of a plurality of sections "x" obtainable by dividing the captured image, and correlation value information $z(x)$ for the first pixel value information $y(x,t)$ and an external disturbance factor for computing an external disturbance factor value "S" indicating a level of the external disturbance factor for each one of the plurality of sections "x" in the memory 209; by using the process execution unit such as the CPU1021, computing the external disturbance factor value "S" by multiplying the first pixel value information and the correlation value information $z(x)$ for each one of the plurality of sections "x;" computing a fluctuation component "S x $z(x)$" caused by the external disturbance by multiplying the computed external disturbance factor value "S" and the correlation value information "$z(x)$;" computing second pixel value information by removing the fluctuation component "S x $z(x)$" from the first pixel value information; and conducting the image processing using the second pixel value information having removed the fluctuation component "S x $z(x)$." With this configuration, the erroneous detection of a detection target object caused by external disturbance factors can be suppressed, in particular prevented.

The above described image processing apparatus, vehicle-mounted device control system, image processing method, image processing program, and carrier medium of the image processing program according to the one or more example embodiments can suppress, in particular prevent the erroneous detection of a detection target object caused by one or more external disturbance factors.

The present invention can be implemented in any convenient form, for example using dedicated hardware, or a mixture of dedicated hardware and software. The computer software can be provided to the programmable device using any storage medium or carrier medium for storing processor-readable code such as a floppy disk, a compact disk read only memory (CD-ROM), a compact disk rewritable (CD-RW), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a hard disk in a server, a solid state memory device or the like, but not limited these.

The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The computer software can be provided from a transmitting apparatus, which transmits signals, via a transmission medium such as public phone line, dedicated line, or other communication line, in which a part of the computer software is transmitted on the transmission medium, which means it is not required to transmit the entire data of the computer software is being transmitted on the transmission medium at one time. The signals includes data signals of the computer software and other data. The transmitting apparatus can transmit the computer software by transmitting data of the computer software continuously or intermittently.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming languages such as machine language, assembler language to control functional units used for the apparatus or system. For example, a particular computer (e.g., personal computer, workstation) may control an information processing apparatus or an image processing apparatus such as image forming apparatus using a computer-readable program, which can execute the above-described processes or steps. In the above-described embodiments, at least one or more of the units of apparatus can be implemented as hardware or as a combination of hardware/software combination. Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited functions.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

**Claims**

1. An image processing apparatus (102) for conducting an image processing to detect an object, existing in a lighting area irradiated by a lighting unit (202), based on an image captured by an image capturing unit (101), the image processing apparatus (102) comprising:

   a memory (209) to store first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;" and
   a process execution unit (1021) to compute the external disturbance factor value "S" by multiplying the first pixel value information "y(x,t)" and the correlation value information "z(x)" for each one of the plurality of sections "x,"
   to compute a fluctuation component "S x z(x)" caused by the external disturbance by multiplying the computed external disturbance factor value "S" and the correlation value information "z(x),"
   to compute second pixel value information "y'(x,t)" by removing the fluctuation component "S x z(x)" from the first pixel value information "y(x,t)," and
   to conduct the image processing using the second pixel value information "y'(x,t)" having removed the fluctuation component "S x z(x).

2. The image processing apparatus (102) of claim 1, wherein the second pixel value information "y'(x,t)" used for the image processing by the process execution unit (1021) is obtainable by computing the external disturbance factor value "S" using the first pixel value information "y(x,t)" and the correlation value information "z(x)" for each one of the plurality of sections "x,"
   by computing the fluctuation component "S x z(x)," caused by the external disturbance and included in first pixel value information "y(x,t)," using the external disturbance factor value "S" and the correlation value information "z(x)" for each one of the plurality of sections, and
   by removing the fluctuation component "S x z(x)" from the first pixel value information "y(x,t)" for each one of the plurality of sections "x."

3. The image processing apparatus (102) of claim 1 or claim 2, wherein the correlation value information "z(x)" is a principal component weight obtainable by conducting a principal component analysis to the first pixel value information "y(x,t)" obtained for each one of the plurality of sections "x" exceeding a defined value under a condition that the external disturbance factor value "S" exceeds a defined fluctuation range.

4. The image processing apparatus (102) of claim 3, wherein the correlation value information "z(x)" includes a first principal component weight obtainable by the principal component analysis.

5. The image processing apparatus (102) of any one of claims 1 to 4, wherein the external disturbance factor is temperature.

6. The image processing apparatus (102) of any one of claims 1 to 5, wherein the first pixel value information "y(x,t)" is a total of pixel values at each one of the plurality of sections "x" or an average of pixel values at each one of the plurality of sections "x."

7. The image processing apparatus (102) of any one of claims 1 to 6, wherein the memory (209) is disposed in the image capturing unit (101).

8. The image processing apparatus (102) of any one of claims 1 to 7, further comprising a correlation value information generation and storing unit (1021) to generate and store the correlation value information "z(x)" in the memory (209) based on the first pixel value information "y(x,t)" exceeding the defined value, obtained for each one of the plurality of sections "x" under a condition that illumination light, emitted from the lighting unit (202) and irradiating the lighting area, is received by an image sensor (206) via a light transmitting member (105), and the external disturbance factor value "S" exceeds the defined fluctuation range.

9. The image processing apparatus (102) of claims 8, further comprising:

   a detection unit (1021) to detect that the external disturbance factor value "S" exceeds the defined fluctuation range.

10. A vehicle-mounted device control system (101, 102, 103, 106, 108) comprising:

    the image processing apparatus (102) of any one of claims 1 to 9 to conduct an image processing to detect an object, existing in a lighting area irradiated by a lighting unit (202), based on an image captured by an image capturing unit (101); and
    a vehicle-mounted device controller (103, 106, 108) to control one or more devices disposed in a vehicle based on a detection result of the object detected by the image processing apparatus (102).

11. A method of processing an image to detect an object, existing in a lighting area irradiated by a lighting unit (202), based on an image captured by an image capturing unit (101), the method comprising the steps of:

    storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;"
    computing the external disturbance factor value "S" by multiplying the first pixel value information "y(x,t)" and the correlation value information "z(x)" for each one of the plurality of sections "x;"
    computing a fluctuation component "S x z(x)" caused by the external disturbance by multiplying the computed external disturbance factor value "S" and the correlation value information "z(x);"
    computing second pixel value information "y'(x,t)" by removing the fluctuation component "S x z(x)" from the first pixel value information "y(x,t);" and
    conducting the image processing using the second pixel value information "y'(x,t)" having removed the fluctuation component "S x z(x).

12. A program that, when executed by a computer having a processing circuitry, causes the computer to execute a method of processing an image to detect an object, existing in a lighting area irradiated by a lighting unit (202), based on an image captured by an image capturing unit (101), the method comprising the steps of:

    storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;"

computing the external disturbance factor value "S" by multiplying the first pixel value information "y(x,t)" and the correlation value information "z(x)" for each one of the plurality of sections "x;"

computing a fluctuation component "S x z(x)" caused by the external disturbance by multiplying the computed external disturbance factor value "S" and the correlation value information "z(x);"

computing second pixel value information "y'(x,t)" by removing the fluctuation component "S x z(x)" from the first pixel value information "y(x,t);" and

conducting the image processing using the second pixel value information "y'(x,t)" having removed the fluctuation component "S x z(x).

13. A non-transitory computer-readable carrier medium storing a program that, when executed by a computer having a processing circuitry, causes the computer to execute a method of processing an image to detect an object, existing in a lighting area irradiated by a lighting unit (202), based on an image captured by an image capturing unit (101), the method comprising the steps of:

storing first pixel value information "y(x,t)," for each one of a plurality of sections "x" obtainable by dividing the captured image, and correlation value information "z(x)" for the first pixel value information "y(x,t)" and an external disturbance factor for computing an external disturbance factor value "S" indicating a level of the external disturbance factor for each one of the plurality of sections "x," the pixel value information "y(x,t)" variable along the time "t;"

computing the external disturbance factor value "S" by multiplying the first pixel value information "y(x,t)" and the correlation value information "z(x)" for each one of the plurality of sections "x;"

computing a fluctuation component "S x z(x)" caused by the external disturbance by multiplying the computed external disturbance factor value "S" and the correlation value information "z(x);"

computing second pixel value information "y'(x,t)" by removing the fluctuation component "S x z(x)" from the first pixel value information "y(x,t);" and

conducting the image processing using the second pixel value information "y'(x,t)" having removed the fluctuation component "S x z(x).

# FIG. 1

# FIG. 2A

# FIG. 2B

# FIG. 3

RANGE OF FIELD ANGLE 105 206

205

204

230

231 L1 202

207

Z

Y X

# FIG. 4

207

204

101B

214

242

215

243

230

101A

241

FIG. 5A

FIG. 5B

RANGE OF FIELD ANGLE

FIG. 5C

RANGE OF FIELD ANGLE

# FIG. 6

# FIG. 7

TRANSMITTANCE RATIO (%)

100

0

WAVELENGTH

WAVELENGTH OF EMISSION
LIGHT OF LIGHT SOURCE

# FIG. 8

TRANSMITTANCE RATIO (%)

100

0

WAVELENGTH

WAVELENGTH OF EMISSION
LIGHT OF LIGHT SOURCE

# FIG. 9

# FIG. 10

FRONT-RUNNING VEHICLE (VEHICLE AHEAD)

213

214

203

WHITE LINE

ROAD SURFACE

# FIG. 11

205

210

220

221

222

223

206B

206B

206

206A  206A

## FIG. 12

## FIG. 13

## FIG. 14

| | b | j | c | |
|---|---|---|---|---|
| P/R | P/C | P/R | P/C |
| S/C | P/R | S/C | P/R |
| P/R | P/C | P/R | P/C |
| S/C | P/R | S/C | P/R |

a — ONE IMAGE PIXEL

d

e   f   g   h

## FIG. 15A

POLARIZATION AREA IN
PERPENDICULAR DIRECTION

221
222
224
223

NON-LIGHT-
SEPARATION AREA

RED COLOR
SEPARATION AREA

206 — 206a  206b  206c  206d

IMAGE CAPTURE PIXEL

## FIG. 15B

POLARIZATION AREA IN
HORIZONTAL DIRECTION

221
222
224
223

POLARIZATION AREA IN
PERPENDICULAR DIRECTION
RED COLOR
SEPARATION AREA
NON-LIGHT-SEPARATION
AREA

206 — 206e  206f  206g  206h

IMAGE CAPTURE PIXEL

# FIG. 16

P P P P

P P P P

ONE IMAGE PIXEL

P P P P

P P P P

b j c

a d

A A

B B

e f g h

# FIG. 17A

POLARIZATION AREA IN
PERPENDICULAR DIRECTION

221

225

224

206

| 206a | 206b | 206c | 206d |

IMAGE CAPTURE PIXEL

# FIG. 17B

POLARIZATION AREA IN
PERPENDICULAR DIRECTION

221

225

224

206

| 206e | 206f | 206g | 206h |

IMAGE CAPTURE PIXEL

# FIG. 18

# FIG. 19

# FIG. 20

START

S1 — IMAGE DATA

S2 — TAKE VEHICLE STATUS INFORMATION

S31 — BINARIZING PROCESS

S32 — LABELING PROCESS

S3: EXTRACTION OF HIGH LUMINANCE IMAGE AREA

S41 — LAMP-PAIR DETERMINATION PROCESS

S42 — COMPUTE DISTANCE TO LAMP-PAIR

S43 — COMPUTE DISTANCE TO SINGLE LAMP

S4: DETECTION OF DISTANCE

S51 — GENERATE RED RATIO IMAGE

S52 — DETERMINE LAMP-TYPE

S5: LAMP-TYPE DETERMINATION PROCESS

S61 — GENERATE POLARIZATION DIFFERENCE IMAGE

S62 — DETERMINE REFLECTION OR NON-REFLECTION

S6: REFLECTION DETERMINATION PROCESS

END

# FIG. 21A

WHITE LINE

# FIG. 21B

WHITE LINE

# FIG. 22

| | | | | | | | | |
|---|---|---|---|---|---|---|---|---|
| 213 | | | | | | | | |
| 214 | IL1 | IL2 | IL3 | IL4 | IL5 | IL6 | IL7 | IL8 |

# FIG. 23

| | Tn-1 | Tn | Tn+1 | t |
|---|---|---|---|---|

FRAME EXPO-
SURE LIGHT
FRAME READING

$FE_{LDW}$ $FE_{AHB}$ $FE_{FCW}$
$FR_{FCW}$ $FR_{LDW}$ $FR_{AHB}$ $FR_{FCW}$ ( )

LIGHT SOURCE   ON

# FIG. 24

| | Tn-1 | Tn | Tn+1 | t |
|---|---|---|---|---|

LINE EXPOSURE
LIGHT

$LE-1_{LDW}$ ... $LE-X_{LDW}$   $LE-1_{AHB}$ ... $LE-X_{AHB}$   $LE-1_{FCW}$ ... $LE-X_{FCW}$

FRAME READING   $FR_{FCW}$ $FR_{LDW}$ $FR_{AHB}$

LIGHT SOURCE   ON

# FIG. 25

DISTURBANCE d

CURRENT i → | LIGHT SOURCE (202) | → | OPTICAL PARTS (230 ETC.) | → | WIND SHIELD (105) | → (+) → | IMAGE SENSOR (206) | y

EFFICIENCY e        REFLECTANCE r

# FIG. 26

```
        ┌─────────┐   ACQUIRING OF
        │  START  │   TEMPERATURE-DEPENDENT
        └────┬────┘   PROPERTY
             │
  ┌─ ─ ─ ─ ─ ┼ ─ ─ ─ ─ ─ ─ ─ ─ ─ ─ ─ ─┐
  │          ▼                          │
  │  ┌──────────────────────────┐       │
  │  │  SAMPLING OF y (x, t)     │  ─S1 │
  │  │  UNDER NO RAINDROPS       │      │
  │  │  CONDITION                │      │
  │  └────────────┬─────────────┘       │
  │               ▼                      │
  │  ┌──────────────────────────┐       │
  │  │  MAIN COMPONENT ANALYSIS  │  ─S2 │
  │  │  OF SAMPLED y (x, t)      │      │
  │  └────────────┬─────────────┘       │
  │               ▼                      │
  │  ┌──────────────────────────┐       │
  │  │  STORE EIGENVALUE z (x)   │  ─S3 │
  │  │  OF FIRST MAIN COMPONENT  │      │
  │  │  OBTAINED BY MAIN         │      │
  │  │  COMPONENT ANALYSIS AS    │      │
  │  │  TEMPERATURE-DEPENDENT    │      │
  │  │  PROPERTY OF EACH         │      │
  │  │  SECTION x                │      │
  │  └────────────┬─────────────┘       │
  └─ ─ ─ ─ ─ ─ ─ ─┼─ ─ ─ ─ ─ ─ ─ ─ ─ ─ ┘
                  ▼
      ┌──────────────────────────┐
      │  ACQUIRE TOTAL VALUE OF   │  ─S4
      │  PIXEL y (x, t) OF EACH   │
      │  SECTION x BASED ON       │
      │  DIFFERENCE IMAGE         │
      └────────────┬─────────────┘
                   ▼
      ┌──────────────────────────┐
      │  COMPUTE CORRELATION      │  ─S5
      │  VALUE S FOR ACQUIRED     │
      │  TOTAL VALUE OF PIXEL     │
      │  y (x, t) OF EACH         │
      │  SECTION x AND EIGENVALUE │
      │  Z (x) OF EACH SECTION x  │
      └────────────┬─────────────┘
                   ▼
      ┌──────────────────────────┐
      │  COMPUTE y' (x, t)        │  ─S6
      │  EXCLUDING TEMPERATURE-   │
      │  BASED ERROR COMPONENT    │
      │  y' (x, t) = y (x, t)     │
      │         - S × z (x)       │
      └────────────┬─────────────┘
                   ▼
      ┌──────────────────────────┐
      │  CONDUCT RAINDROP         │  ─S7
      │  DETECTION PROCESSING     │
      └────────────┬─────────────┘
                   ▼
                  S8
              ╱────────╲
       YES   ╱ RE-ACQUIRING ╲
    ◄───────◄ OF TEMPERATURE-  ►
            ╲ DEPENDENT       ╱
             ╲ PROPERTY ?    ╱
              ╲────┬────────╱
                   │ NO
                   ▼
```

$y' (x, t) = y (x, t) - S \times z (x)$

# FIG. 27

# FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010014494 A